# EUROPEAN PATENT APPLICATION

(11) **EP 4 561 172 A1**
(43) Date of publication of application: **28.05.2025**
(21) Application number: 23849248.2
(22) Date of filing: 26.07.2023
(51) Int. Cl.: H04W 36/00

(54) **COMMUNICATION METHOD AND APPARATUS**

(30) Priority: 30.07.2022 CN 202210919785; 09.08.2022 CN 202210952981
(71) Applicant: Huawei Technologies Co., Ltd., Shenzhen, Guangdong 518129 (CN)
(72) Inventor: YAO, Chuting, Shenzhen, Guangdong 518129 (CN); XU, Haibo, Shenzhen, Guangdong 518129 (CN)
(74) Representative: Körber, Martin Hans
(86) International application number: PCT/CN2023/109360
(87) International publication number: WO 2024/027540

(57) **Abstract**

This application relates to a communication method and apparatus. A target network device sends first information to a source network device, to indicate a receiving status of a data packet. The target network device receives a first data packet from the source network device, where the first data packet is a data packet of a remote device, and the first data packet is determined based on the first information. The remote device is connected to the source network device through a first relay device before transmission path switching, and is connected to the target network device after transmission path switching. For example, there are one or more first data packets, and the first data packet may include a data packet that fails to be received by the remote device. In this way, the target network device may send, to the remote device, the data packet that fails to be received by the remote device, to reduce a packet loss rate.

## Description

### CROSS-REFERENCE TO RELATED APPLICATIONS

This application claims priority to Chinese Patent Application No. 202210919785.7, filed with the China National Intellectual Property Administration on July 30, 2022 and entitled "COMMUNICATION METHOD AND APPARATUS", and this application claims priority to Chinese Patent Application No. 202210952981.4, filed with the China National Intellectual Property Administration on August 9, 2022 and entitled "COMMUNICATION METHOD AND APPARATUS", both of which are incorporated herein by reference in their entireties.

### TECHNICAL FIELD

This application relates to the field of communication technologies, and in particular, to a communication method and apparatus.

### BACKGROUND

In a relay (relay) scenario, a remote (remote) user equipment (user equipment, UE) may perform transmission path switching. This process of transmission path switching may be referred to as path switch (path switch). For example, the remote UE may switch from a direct path between the remote UE and a base station to a path through which the remote UE is connected to another base station through a relay UE; or the remote UE may switch from a path through which the remote UE is connected to a base station through a relay UE to a path through which the remote UE is connected to another base station through another relay UE.

If the process in which the remote UE performs transmission path switching is performed in a data transmission process, some problems may occur. For example, a source network device sends some data packets, and the relay UE may receive some of the data packets and send feedback information to the source network device, to indicate that these data packets are successfully received. When forwarding the data packets to a target network device, the source network device no longer forwards the data packets that have been acknowledged as successfully received data packets by the relay UE. However, although the data packets have been successfully received by the relay UE, the remote UE does not necessarily successfully receive the data packets. According to a current mechanism, even if the remote UE fails to receive the data packets, the target network device cannot send the data packets to the remote UE again, resulting in a high packet loss rate.

### SUMMARY

Embodiments of this application provide a communication method and apparatus, to reduce a rate for packet loss resulting from transmission path switching.

According to a first aspect, a first communication method is provided. The method may be performed by a target network device, or may be performed by another device that includes a function of the target network device, or may be performed by a chip system (or a chip) or another functional module. The chip system or the functional module can implement the function of the target network device. The chip system or the functional module is, for example, disposed in the target network device. The method includes: sending first information to a source network device, where the first information indicates a receiving status of a data packet; and receiving a first data packet from the source network device, where the first data packet is a data packet of a remote device, the first data packet is determined based on the first information, and the remote device is connected to the source network device through a first relay device before transmission path switching, and is connected to the target network device after transmission path switching.

In this embodiment of this application, the target network device may indicate the receiving status of the data packet to the source network device, so that the source network device can send the first data packet to the target network device. The first data packet is the data packet of the remote device. For example, there are one or more first data packets, and the first data packet may include a data packet that fails to be received by the remote device. In this way, the target network device may send, to the remote device, the data packet that fails to be received by the remote device, to reduce a packet loss rate.

In an optional implementation, the method further includes: sending a second data packet to the remote device, where the second data packet is determined based on the first data packet. For example, the second data packet may include a data packet that fails to be received by the remote device. In other words, after the remote device performs transmission path switching, the target network device may send, to the remote device, the data packet that fails to be received by the remote device, to reduce a packet loss amount of the remote device.

In an optional implementation, the remote device is connected to the target network device through a direct path or an indirect path after transmission path switching.

In an optional implementation, the method further includes: receiving second information from the remote device, where the second information indicates a data packet that fails to be received by the remote device and/or a data packet that is successfully received by the remote device. After performing transmission path switching, the remote device may send the second information to the target network device, to indicate an actual receiving status of the data packet of the remote device, so that the target network device can send, to the remote device based on the second information, the data packet that fails to be received by the remote device.

In an optional implementation, the second information is a PDCP status report; or the second information is included in an RRC reconfiguration message, and the RRC reconfiguration message indicates that the remote device is successfully handed over to the target network device. An implementation of the second information is not limited in this embodiment of this application.

In an optional implementation, the first data packet is the second data packet; or the first data packet is a part of the second data packet, the first data packet is a data packet that has not received by the target network device from the source network device before the target network device receives the first data packet, the second data packet further includes another part of data packet, and the another part of data packet is a data packet that has been received by the target network device from the source network device before the target network device receives the first data packet; or the second data packet is a part of the first data packet. There are a plurality of possible implementations of the first data packet and the second data packet. For each device, the implementations are flexible.

In an optional implementation, the method further includes: receiving a third data packet from the source network device before sending the first information to the source network device, where the third data packet includes a data packet for which the source network device receives no receiving feedback, and/or includes a data packet that has not been sent by the source network device to the remote device, and the third data packet includes the another part of data packet. For example, the source network device may forward data to the target network device during transmission path switching. In this case, a process in which the source network device sends the first data packet to the target network device may be considered as a supplementary data forwarding process.

In an optional implementation, the receiving a first data packet from the source network device includes: receiving a third data packet from the source network device, where the third data packet includes a data packet for which the source network device receives no receiving feedback, and/or includes a data packet that has not been sent by the source network device to the remote device, and the third data packet includes the first data packet. For example, the source network device may not need to forward data to the target network device during transmission path switching, but forwards the data to the target network device after transmission path switching succeeds. For example, in addition to sending the first data packet to the target network device, the source network device further sends the third data packet. In this way, less interaction between the source network device and the target network device may be performed, so that the source network device can forward data packets to the target network device at a time.

In an optional implementation, the third data packet includes the data packet that has not been sent by the source network device to the remote device, and the data packet that has not been sent by the source network device to the remote device includes a data packet that is not associated with a sequence number; and the method further includes: receiving third information from the source network device, where the third information indicates a sequence number of a 1^{st} data packet that is not associated with a sequence number. In data packets forwarded by the source network device to the target network device, there may be a data packet that is not associated with a sequence number. Therefore, the source network device may indicate, to the target network device, the sequence number of the 1^{st} data packet that is not associated with a sequence number, so that the target network device can accordingly associate a corresponding sequence number with each data packet that is not associated with a sequence number.

According to a second aspect, a second communication method is provided. The method may be performed by a source network device, or may be performed by another device that includes a function of the source network device, or may be performed by a chip system (or a chip) or another functional module. The chip system or the functional module can implement the function of the source network device. The chip system or the functional module is, for example, disposed in the source network device. The method includes: receiving first information from a target network device, where the first information indicates a receiving status of a data packet; and sending a first data packet to the target network device, where the first data packet is a data packet of a remote device, the first data packet is determined based on the first information, and the remote device is connected to the source network device through a first relay device before transmission path switching, and is connected to the target network device after transmission path switching.

In an optional implementation, the remote device is connected to the target network device through a direct path or an indirect path after transmission path switching.

In an optional implementation, the method further includes: sending a third data packet to the target network device before receiving the first information from the target network device, where the third data packet includes a data packet for which the source network device receives no receiving feedback, and/or includes a data packet that has not been sent by the source network device to the remote device.

In an optional implementation, the sending a first data packet to the target network device includes: sending a third data packet to the target network device, where the third data packet includes a data packet for which the source network device receives no receiving feedback, and/or includes a data packet that has not been sent by the source network device to the remote device, and the third data packet includes the first data packet.

In an optional implementation, the third data packet includes the data packet that has not been sent by the source network device to the remote device, and the data packet that has not been sent by the source network device to the remote device includes a data packet that is not associated with a sequence number; and the method further includes: sending third information to the target network device, where the third information indicates a sequence number of a 1^{st} data packet that is not associated with a sequence number.

For technical effects brought by the second aspect or the optional implementations, refer to the descriptions of the technical effects of the first aspect or the corresponding implementations.

According to a third aspect, a third communication method is provided. The method may be performed by a source network device, or may be performed by another device that includes a function of the source network device, or may be performed by a chip system (or a chip) or another functional module. The chip system or the functional module can implement the function of the source network device. The chip system or the functional module is, for example, disposed in the source network device. The method includes: sending fourth information to a remote device, where the fourth information indicates a first data packet, to indicate the remote device to stop communicating with a first relay device after receiving the first data packet, and the remote device is connected to the source network device through the first relay device before transmission path switching, and is connected to a target network device after transmission path switching. In this embodiment of this application, the remote device is disconnected from the first relay device only after receiving the first data packet. In this case, it may be considered that the remote device successfully receives the first data packet and all data packets prior to the first data packet. However, the source network device sends a data packet posterior to the first data packet to the target network device. Therefore, after the remote device performs transmission path switching, the target network device may continue to send the data packet to the remote device. This reduces a packet loss amount of the remote device. In addition, the source network device does not need to send excessive data packets to the target network device. This can reduce transmission overheads.

In an optional implementation, the fourth information is included in a switching command, and the switching command indicates the remote device to perform transmission path switching. The fourth information may be included in the switching command, or may be separately sent.

In an optional implementation, the method further includes: sending at least one data packet to the target network device, where a 1^{st} data packet in the at least one data packet is a next data packet after the first data packet. Because the source network device has ensured to some extent, by using the fourth information, that an actual receiving status of a data packet of the remote device is consistent with a receiving status that is of a data packet of the remote device and that is considered by the source network device, the source network device may forward a data packet to the target network device starting from the next data packet of the first data packet, and does not need to send excessive data packets to the target network device. This can reduce the transmission overheads.

In an optional implementation, the at least one data packet includes a data packet that is not associated with a sequence number; and the method further includes: sending fifth information to the target network device, where the fifth information indicates a sequence number of a 1^{st} data packet that is not associated with a sequence number. In data packets forwarded by the source network device to the target network device, there may be a data packet that is not associated with a sequence number. Therefore, the source network device may indicate, to the target network device, the sequence number of the 1^{st} data packet that is not associated with a sequence number, so that the target network device can accordingly associate a corresponding sequence number with each data packet that is not associated with a sequence number.

According to a fourth aspect, a fourth communication method is provided. The method may be performed by a remote device, or may be performed by another device that includes a function of the remote device, or may be performed by a chip system (or a chip) or another functional module. The chip system or the functional module can implement the function of the remote device. The chip system or the functional module is, for example, disposed in the remote device. The remote device is, for example, a terminal device or a network device. The method includes: receiving fourth information from a source network device, where the fourth information indicates a first data packet, to indicate the remote device to stop communicating with a first relay device after receiving the first data packet, and the remote device is connected to the source network device through the first relay device before transmission path switching, and is connected to a target network device after transmission path switching.

In an optional implementation, the fourth information is included in a switching command, and the switching command indicates the remote device to perform transmission path switching.

In an optional implementation, the method further includes: after the switching command is received, if the first data packet has not been received, continuing to receive a data packet from the first relay device; and when the first data packet is received, or when a 1^{st} data packet that is not delivered to an upper layer of a PDCP layer is the first data packet, stopping communicating with the first relay device. Based on an indication of the fourth information, in the case that no first data packet is received, the remote device does not need to disconnect from the first relay device even if the remote device receives the switching command. Instead, the remote device may continue to receive the data packet from the first relay device until the first data packet is received, and then disconnect from the first relay device. This mechanism is used to ensure as much as possible that the remote device successfully receives the first data packet and all data packets prior to the first data packet. In this way, the target network device does not need to send the first data packet and all the data packets prior to the first data packet to the remote device, and the source network device may not need to forward the first data packet and all the data packets prior to the first data packet to the target network device. This helps reduce transmission overheads.

For technical effects brought by the fourth aspect or some optional implementations, refer to the descriptions of the technical effects of the third aspect or the corresponding implementations.

According to a fifth aspect, a fifth communication method is provided. The method may be performed by a source network device, or may be performed by another device that includes a function of the source network device, or may be performed by a chip system (or a chip) or another functional module. The chip system or the functional module can implement the function of the source network device. The chip system or the functional module is, for example, disposed in the source network device. The method includes: sending at least one data packet to a target network device, where the at least one data packet includes a data packet that the source network device predicts that a remote device fails to receive, and the remote device is connected to the source network device through a first relay device before transmission path switching, and is connected to the target network device after transmission path switching. In this embodiment of this application, the source network device sends, to the target network device based on prediction, a data packet that may fail to be received by the remote device. Therefore, if the remote device fails to receive data packets, these data packets may have been stored in the target network device. In this case, if the target network device determines, based on first information, the data packets that fail to be received by the remote device, the target network device may send these locally stored data packets to the remote device, and does not need to request the data packets from the source network device. In this way, a process of interaction between the target network device and the source network device is reduced, signaling overheads are reduced, and a delay in obtaining data by the remote device is reduced.

In an optional implementation, the method further includes: sending fourth information to the remote device, where the fourth information indicates a first data packet, to indicate the remote device to stop communicating with the first relay device after receiving the first data packet.

In an optional implementation, the fourth information is included in a switching command, and the switching command indicates the remote device to perform transmission path switching.

In an optional implementation, the at least one data packet includes a data packet that is not associated with a sequence number; and the method further includes: sending fifth information to the target network device, where the fifth information indicates a sequence number of a 1^{st} data packet that is not associated with a sequence number.

For technical effects brought by the fifth aspect or some optional implementations, refer to the descriptions of the technical effects of the third aspect or the corresponding implementations.

According to a sixth aspect, a sixth communication method is provided. The method may be performed by a source network device, or may be performed by another device that includes a function of the source network device, or may be performed by a chip system (or a chip) or another functional module. The chip system or the functional module can implement the function of the source network device. The chip system or the functional module is, for example, disposed in the source network device. The method includes: sending a switching command to a remote device, where the switching command indicates the remote device to perform transmission path switching, and the remote device is connected to the source network device through a first relay device before transmission path switching, and is connected to a target network device after transmission path switching; and receiving sixth information from the remote device, where the sixth information indicates a data packet that fails to be received by the remote device and/or a data packet that is successfully received by the remote device. In this embodiment of this application, the remote device may indicate an actual receiving status of the remote device to the source network device by using the sixth information. The source network device learns of the actual receiving status of the remote device, and therefore may forward, to the target network device, data packets that fail to be received by the remote device. After the remote device performs transmission path switching, the target network device may send these data packets to the remote device, and does not need to request these data packets from the source network device. This reduces a process of interaction between the target network device and the source network device, and can also reduce a packet loss amount of the remote device.

In an optional implementation, the switching command further includes seventh information, and the seventh information indicates the remote device to send receiving status information. The source network device may trigger the remote device to send the sixth information, so that an implementation of the remote device is simplified.

In an optional implementation, the method further includes: sending at least one data packet to the target network device, where the at least one data packet includes the data packet that fails to be received by the remote device. Because the source network device has learned of the actual receiving status of the remote device, the source network device may send, to the target network device, the data packet that fails to be received by the remote device, and the source network device may not send, to the target network device, the data packet that is successfully received by the remote device. In this way, a packet loss rate can be reduced, and transmission overheads can also be reduced.

In an optional implementation, the at least one data packet further includes a data packet that has not been sent by the source network device to the remote device. The source network device may further send, to the target network device, some data packets that have not been sent to the remote device in time, and the target network device sends the data packets to the remote device.

In an optional implementation, the data packet that has not been sent by the source network device to the remote device includes a data packet that is not associated with a sequence number; and the method further includes: sending eighth information to the target network device, where the eighth information indicates a sequence number of a 1^{st} data packet that is not associated with a sequence number. In data packets forwarded by the source network device to the target network device, there may be a data packet that is not associated with a sequence number. Therefore, the source network device may indicate, to the target network device, the sequence number of the 1^{st} data packet that is not associated with a sequence number, so that the target network device can accordingly associate a corresponding sequence number with each data packet that is not associated with a sequence number.

According to a seventh aspect, a seventh communication method is provided. The method may be performed by a remote device, or may be performed by another device that includes a function of the remote device, or may be performed by a chip system (or a chip) or another functional module. The chip system or the functional module can implement the function of the remote device. The chip system or the functional module is, for example, disposed in the remote device. The remote device is, for example, a terminal device or a network device. The method includes: receiving a switching command from a source network device, where the switching command indicates the remote device to perform transmission path switching, and the remote device is connected to the source network device through a first relay device before transmission path switching, and is connected to a target network device after transmission path switching; and sending sixth information to the source network device, where the sixth information indicates a data packet that fails to be received by the remote device and/or a data packet that is successfully received by the remote device.

In an optional implementation, the switching command further includes seventh information, and the seventh information indicates the remote device to send receiving status information.

For technical effects brought by the seventh aspect or the optional implementations, refer to the descriptions of the technical effects of the sixth aspect or the corresponding implementations.

According to an eighth aspect, an eighth communication method is provided. The method may be performed by a first relay device, or may be performed by another device that includes a function of the first relay device, or may be performed by a chip system (or a chip) or another functional module. The chip system or the functional module can implement the function of the first relay device. The chip system or the functional module is, for example, disposed in the first relay device. The first relay device is, for example, a terminal device or a network device. The method includes: receiving a first data packet from a source network device; sending the first data packet to a remote device, where the remote device is connected to the source network device through the first relay device before transmission path switching; receiving first feedback information from the remote device, where the first feedback information indicates that the first data packet is successfully received or fails to be received; and sending second feedback information to the source network device based on the first feedback information, where the second feedback information indicates that the first data packet is successfully received or fails to be received.

According to a ninth aspect, a communication apparatus is provided. The communication apparatus may be the target network device according to the first aspect. The communication apparatus has a function of the target network device. The communication apparatus is, for example, a target network device, or a large device including the target network device, or a functional module in the target network device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

In an optional implementation, the transceiver unit (or the sending unit) is configured to send first information to a source network device, where the first information indicates a receiving status of a data packet; and the transceiver unit (or the receiving unit) is configured to receive a first data packet from the source network device, where the first data packet is a data packet of a remote device, the first data packet is determined based on the first information, and the remote device is connected to the source network device through a first relay device before transmission path switching, and is connected to a target network device after transmission path switching.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the target network device according to the first aspect.

According to a tenth aspect, a communication apparatus is provided. The communication apparatus may be the source network device according to the second aspect, the third aspect, the fifth aspect, or the sixth aspect. The communication apparatus has a function of the source network device. The communication apparatus is, for example, a source network device, or a large device including the source network device, or a functional module in the source network device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the ninth aspect.

In an optional implementation, the transceiver unit (or the receiving unit) is configured to receive first information from a target network device, where the first information indicates a receiving status of a data packet; and the transceiver unit (or the sending unit) is configured to send a first data packet to the target network device, where the first data packet is a data packet of a remote device, the first data packet is determined based on the first information, and the remote device is connected to the source network device through a first relay device before transmission path switching, and is connected to the target network device after transmission path switching.

In an optional implementation, the transceiver unit (or the sending unit) is configured to send fourth information to a remote device, where the fourth information indicates a first data packet, to indicate the remote device to stop communicating with a first relay device after receiving the first data packet, and the remote device is connected to the source network device through the first relay device before transmission path switching, and is connected to a target network device after transmission path switching.

In an optional implementation, the transceiver unit (or the sending unit) is configured to send at least one data packet to a target network device, where the at least one data packet includes a data packet that the source network device predicts that a remote device fails to receive, and the remote device is connected to the source network device through a first relay device before transmission path switching, and is connected to the target network device after transmission path switching.

In an optional implementation, the transceiver unit (or the sending unit) is configured to send a switching command to a remote device, where the switching command indicates the remote device to perform transmission path switching, and the remote device is connected to the source network device through a first relay device before transmission path switching, and is connected to a target network device after transmission path switching; and the transceiver unit (or the receiving unit) is configured to receive sixth information from the remote device, where the sixth information indicates a data packet that fails to be received by the remote device and/or a data packet that is successfully received by the remote device.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the source network device according to the second aspect, the third aspect, the fifth aspect, or the sixth aspect.

According to an eleventh aspect, a communication apparatus is provided. The communication apparatus may be the remote device according to the fourth aspect or the seventh aspect. The communication apparatus has a function of the remote device. The communication apparatus is, for example, a remote device, or a large device including the remote device, or a functional module in the remote device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the sixth aspect.

In an optional implementation, the transceiver unit (or the receiving unit) is configured to receive fourth information from a source network device, where the fourth information indicates a first data packet, to indicate the remote device to stop communicating with a first relay device after receiving the first data packet, and the remote device is connected to the source network device through the first relay device before transmission path switching, and is connected to a target network device after transmission path switching.

In an optional implementation, the transceiver unit (or the receiving unit) is configured to receive a switching command from a source network device, where the switching command indicates the remote device to perform transmission path switching, and the remote device is connected to the source network device through a first relay device before transmission path switching, and is connected to a target network device after transmission path switching; and the transceiver unit (or the sending unit) is configured to send sixth information to the source network device, where the sixth information indicates a data packet that fails to be received by the remote device and/or a data packet that is successfully received by the remote device.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the remote device according to the fourth aspect or the seventh aspect.

According to a twelfth aspect, a communication apparatus is provided. The communication apparatus may be the first relay device according to the eighth aspect. The communication apparatus has a function of the first relay device. The communication apparatus is, for example, a first relay device, or a large device including the first relay device, or a functional module in the first relay device, for example, a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to the descriptions in the sixth aspect.

In an optional implementation, the transceiver unit (or the receiving unit) is configured to receive a first data packet from a source network device; the transceiver unit (or the sending unit) is configured to send the first data packet to a remote device, where the remote device is connected to the source network device through the first relay device before transmission path switching; the transceiver unit (or the receiving unit) is configured to receive first feedback information from the remote device, where the first feedback information indicates that the first data packet is successfully received or fails to be received; and the transceiver unit (or the sending unit) is configured to send second feedback information to the source network device based on the first feedback information, where the second feedback information indicates that the first data packet is successfully received or fails to be received.

In an optional implementation, the communication apparatus further includes a storage unit (sometimes also referred to as a storage module). The processing unit is configured to: be coupled to the storage unit, and execute a program or instructions in the storage unit, to enable the communication apparatus to perform a function of the first relay device according to the eighth aspect.

According to a thirteenth aspect, a first communication system is provided, including a target network device and a source network device, where the target network device is configured to perform the communication method according to the first aspect, and the source network device is configured to perform the communication method according to the second aspect.

According to a fourteenth aspect, a second communication system is provided, including a source network device, where the source network device is configured to perform the communication method according to the third aspect or the fifth aspect.

Optionally, the second communication system further includes a remote device, configured to perform the communication method according to the fourth aspect.

According to a fifteenth aspect, a third communication system is provided, including a remote device and a source network device, where the remote device is configured to perform the communication method according to the seventh aspect, and the source network device is configured to perform the communication method according to the sixth aspect.

According to a sixteenth aspect, a fourth communication system is provided, including a first relay device, configured to perform the communication method according to the eighth aspect.

According to a seventeenth aspect, a computer-readable storage medium is provided, where the computer-readable storage medium is configured to store a computer program or instructions, and when the computer program or the instructions is/are run, the method performed by the remote device, the first relay device, the target network device, or the source network device in the foregoing aspects is implemented.

According to an eighteenth aspect, a computer program product including instructions is provided. When the computer program product is run on a computer, the method in each of the foregoing aspects is implemented.

According to a nineteenth aspect, a chip system is provided, including a processor and an interface. The processor is configured to invoke instructions from the interface and run the instructions, to enable the chip system to implement the method in each of the foregoing aspects.

### BRIEF DESCRIPTION OF DRAWINGS

FIG. 1A and FIG. 1B are diagrams of two application scenarios according to embodiments of this application;
FIG. 2 is a diagram of a possible packet loss resulting from switching in a process of sending a data packet by a source network device to a remote device;
FIG. 3 to FIG. 7 are flowcharts of several communication methods according to embodiments of this application;
FIG. 8 is a diagram of an apparatus according to an embodiment of this application; and
FIG. 9 is a diagram of another apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

In embodiments of this application, a terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, including but not limited to the following scenarios: cellular communication, device-to-device (device-to-device, D2D) communication, vehicle to everything (vehicle to everything, V2X), machine to machine/machine type communication (machine to machine/machine type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, a smart office, smart wear, smart transportation, a smart city (smart city), an unmanned aerial vehicle, and a robot. The terminal device may be sometimes referred to as a user equipment (user equipment, UE), a terminal, an access station, a UE station, a remote station, a wireless communication device, a user apparatus, or the like. For ease of description, an example in which the terminal device is a UE is used for description in embodiments of this application.

A network device in embodiments of this application includes, for example, an access network device and/or a core network device. The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a subsequent evolved base station in the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks using a same access technology, or may support networks using different access technologies. The base station may include one or more co-site or non-co-site transmission reception points. Alternatively, the access network device may be a radio controller, a central unit (central unit, CU), and/or a distributed unit (distributed unit, DU) in a cloud radio access network (cloud radio access network, CRAN) scenario. Alternatively, the access network device may be a server or the like. For example, an access network device in a vehicle-to-everything (vehicle-to-everything, V2X) technology may be a roadside unit (roadside unit, RSU). The following provides descriptions by using an example in which the access network device is a base station. The base station may communicate with the terminal device, or may communicate with the terminal device through a relay station. The terminal device may communicate with a plurality of base stations in different access technologies. The core network device is configured to implement functions such as mobility management, data processing, session management, and policy and charging. Names of devices that implement core network functions in systems using different access technologies may be different. This is not limited in embodiments of this application. A 5G system is used as an example. The core network device includes an access and mobility management function (access and mobility management function, AMF), a session management function (session management function, SMF), a policy control function (policy control function, PCF), a user plane function (user plane function, UPF), or the like.

In embodiments of this application, a communication apparatus configured to implement a function of the network device may be a network device, or may be an apparatus that can support the network device in implementing the function, for example, a chip system. The apparatus may be installed in the network device. In the technical solutions provided in embodiments of this application, the technical solutions provided in embodiments of this application are described by using an example in which the apparatus configured to implement the function of the network device is a network device.

In embodiments of this application, unless otherwise specified, a quantity of nouns represents "a singular noun or plural nouns", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one of a, b, or c indicates a, b, c, a and b, a and c, b and c, or a, b, and c, where a, b, and c may be singular or plural.

Ordinal numbers such as "first" and "second" mentioned in embodiments of this application are used to distinguish between a plurality of objects, but are not used to limit sizes, content, sequences, time sequences, priorities, importance, or the like of the plurality of objects. For example, first information and second information may be a same piece of information, or may be different information. In addition, the names do not indicate a difference in content, sizes, transmit ends/receive ends, priorities, importance, or the like of the two pieces of information. In addition, step numbers in embodiments described in this application are merely used to distinguish between different steps, but are not used to limit a sequence of the steps. For example, S301 may be performed before S302, or may be performed after S302, or may be performed at the same time with S302.

The technical solutions provided in embodiments of this application may be applied to a 4th generation (4th generation, 4G) mobile communication technology system, for example, a long term evolution (long term evolution, LTE) system, or may be applied to a 5th generation (5th generation, 5G) mobile communication technology system, for example, a new radio (new radio, NR) system, or may be applied to a next generation mobile communication system or another similar communication system, for example, a 6th generation (6th generation, 6G) mobile communication technology system. This is not specifically limited. In addition, the technical solutions provided in embodiments of this application may be applied to a device-to-device (device-to-device, D2D) scenario, for example, an NR-D2D scenario, or may be applied to a vehicle to everything (vehicle to everything, V2X) scenario, for example, an NR-V2X scenario or a vehicle-to-vehicle (vehicle-to-vehicle, V2V) scenario. Alternatively, the technical solutions provided in embodiments of this application may be applied to the field such as intelligent driving, assisted driving, or intelligent connected vehicles. If the technical solutions are applied to the D2D scenario, both a relay device and a remote device may be UEs. If the technical solutions are applied to a non-D2D scenario, one of a relay device or a remote device may be a UE, and the other device may be a network device (for example, an access network device), or both the remote device and the relay device may be network devices. In each of the following embodiments of this application, a remote device is, for example, a UE or a network device, and a relay device is, for example, a UE or a network device.

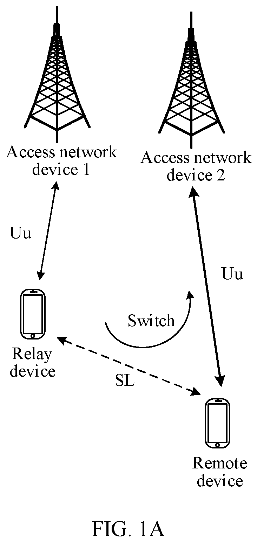

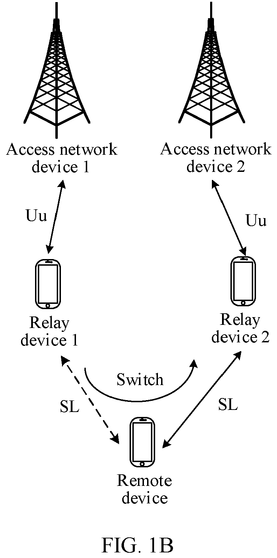

This application relates to a UE-to-network relay (UE-to-network relay) mechanism, and this mechanism may be used to improve coverage of a cellular network. FIG. 1A and FIG. 1B are diagrams of two application scenarios according to embodiments of this application. In FIG. 1A, a remote device is initially connected to an access network device 1 through a relay device. After transmission path switching is performed, the remote device is connected to an access network device 2 through a Uu interface, or it is considered that the remote device is directly connected to the access network device 2. Such a scenario is considered as a process of inter gNB (inter gNB) switching from an indirect path to a direct path (indirect link -> direct link). In FIG. 1B, a remote device is initially connected to an access network device 1 through a relay device 1. After transmission path switching is performed, the remote device is connected to an access network device 2 through a relay device 2. Such a scenario is considered as a process of inter gNB switching from an indirect path to an indirect path (indirect link -> indirect link).

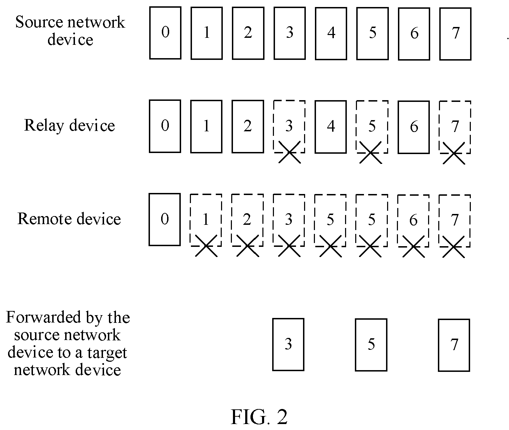

The scenario shown in FIG. 1A is used as an example. Refer to FIG. 2. If a process in which transmission path switching performed by a remote UE is within a data transmission process, some problems may occur. The access network device 1 in FIG. 1A sends data packets whose sequence numbers are {0, 1, 2, 3, 4, 5, 6, 7}. The relay device receives the data packets whose sequence numbers are {0, 1, 2, 4, 6}, and sends a radio link control (radio link control, RLC) feedback to the access network device 1, to indicate that the data packets whose sequence numbers are {0, 1, 2, 4, 6} are successfully received. The access network device 1 determines, based on the RLC acknowledged feedback, that a receive end has successfully received the data packets whose sequence numbers are {0, 1, 2, 4, 6}. When the relay device sends the data packets whose sequence numbers are {0, 1, 2, 4, 6} to the remote device, if the remote device receives a path switching instruction from the access network device 1, the remote device may disconnect from the relay device. In this case, the remote device receives only the data packet whose sequence number is {0} from the relay device, and has not received the data packets whose sequence numbers are {1, 2, 4, 6}. In other words, the data packets whose sequence numbers are {1, 2, 3, 4, 5, 6, 7} have not been received by the remote device. However, when forwarding the data packets of the remote device to the access network device 2, the access network device 1 no longer forwards the data packets that have been acknowledged as being successfully received. Therefore, the access network device 1 forwards data of the data packets whose sequence numbers are {3, 5, 7} to the access network device 2 based on the RLC feedback from the relay device. After the remote device switches its transmission path to the access network device 2, the access network device 2 retransmits only the data packets whose sequence numbers are {3, 5, 7} to the remote device. As a result, the remote device cannot receive the data packets whose sequence numbers are {1, 2, 4, 6}.

In view of this, the technical solutions in embodiments of this application are provided. In embodiments of this application, a target network device may indicate a receiving status of a data packet to a source network device, so that the source network device can send a first data packet to the target network device. The first data packet is a data packet of a remote device. For example, there are one or more first data packets, and the first data packet may include a data packet that fails to be received by the remote device. In this way, the target network device may send, to the remote device, the data packet that fails to be received by the remote device, to reduce a packet loss rate.

To better describe embodiments of this application, the following describes methods provided in embodiments of this application with reference to the accompanying drawings. In the accompanying drawings corresponding to embodiments of this application, all steps represented by using dashed lines are optional steps. The method provided in each embodiment of this application may be applied to a network architecture shown in FIG. 1A or FIG. 1B. For example, a remote device described below is, for example, the remote device shown in FIG. 1A or FIG. 1B; a source network device described below is, for example, the access network device 1 shown in FIG. 1A or FIG. 1B; a target network device described below is, for example, the access network device 2 shown in FIG. 1A or FIG. 1B; and a first relay device described below is, for example, the relay device shown in FIG. 1A or the relay device 1 shown in FIG. 1B. It can be learned from FIG. 1A or FIG. 1B that, in embodiments of this application, the remote device is connected to the source network device through the first relay device before transmission path switching, and is connected to the target network device after transmission path switching. After performing transmission path switching, the remote device may be connected to the target network device through a direct path or an indirect path. The direct path is a path for communication through a Uu interface, and the indirect path is, for example, a path for connecting the target network device through a second relay device (for example, the relay device 2 shown in FIG. 1B).

In embodiments of this application, the "direct path" is a path over which the remote device communicates with the access network device (or a cell provided by the access network device) through the Uu interface but not through the relay device, and the "indirect path" is a path over which the remote device communicates with the access network device (or the cell provided by the access network device) through the relay device. In addition, a "path" may alternatively be replaced with a "link". For example, the "direct path" may also be referred to as a "direct link", and the "indirect path" may also be referred to as an "indirect link".

In embodiments of this application, a device A sends a message to a device B. For the device B, it may be considered that the message is from the device A. The sending process may be direct sending, or indirect sending (for example, forwarding through another device).

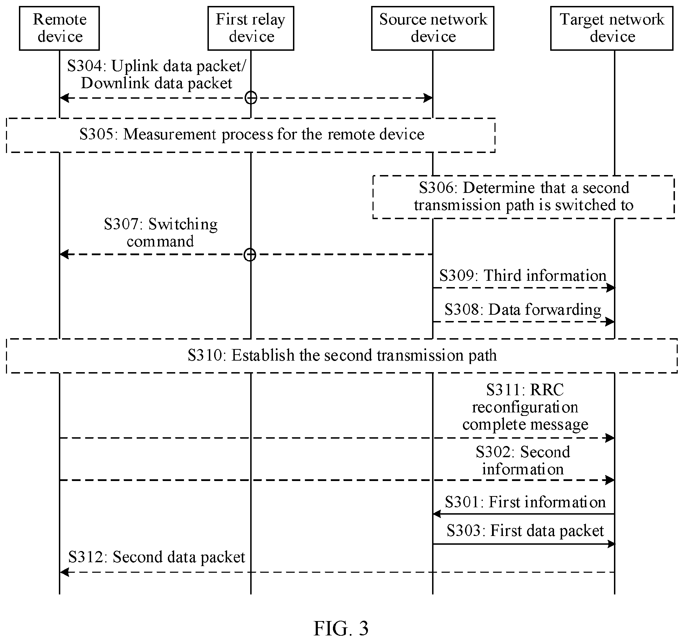

To resolve technical problem to be resolved in this application, embodiments of this application provide a plurality of methods. First, refer to FIG. 3, which is a flowchart of a first communication method according to an embodiment of this application.

S301: A target network device sends first information to a source network device. Correspondingly, the source network device receives the first information from the target network device.

The first information may indicate a receiving status of a data packet, or indicate (or be used to request) data forwarding. For example, the receiving status of the data packet indicated by the first information may include a status for receiving a data packet by a remote device and/or a status for receiving a data packet by the target network device. The data packet indicated by the first information may be the data packet of the remote device. If the first information is used to request data forwarding, the first information may be used to request to forward the data packet of the remote device.

Optionally, before S301, the method may further include: S302: The remote device sends second information to the target network device. Correspondingly, the target network device receives the second information from the remote device. The second information may indicate a data packet that fails to be received by the remote device and/or a data packet that is successfully received by the remote device. For example, after the remote device switches a transmission path to a path through which the remote device is connected to the target network device, or after the remote device successfully performs transmission path switching, the remote device may send the second information to the target network device. For example, the second information is a packet data convergence protocol (packet data convergence protocol, PDCP) status report, or the second information may be other information. The second information may be separately sent, or the second information may be carried in a message indicating that path switching succeeds. For example, the remote device may send a radio resource control (radio resource control, RRC) reconfiguration message to the target network device, to indicate that the remote device successfully performs transmission path switching, or indicate that the remote device is successfully handed over to the target network device. In this case, the second information may be included in the RRC reconfiguration message. If the target network device receives the second information, the first information in S301 may be determined based on the second information.

For example, if a piece of information needs to indicate M data packets, an indication manner is that the information may include indexes of the M data packets. For example, if the first information indicates data packets whose sequence numbers are {1, 2, 4, 6}, the first information may include the sequence numbers {1, 2, 4, 6}.

Alternatively, if a piece of information needs to indicate M data packets, another indication manner is that the information may include an index of a 1^{st} data packet in the M data packets. For example, if the first information indicates data packets whose sequence numbers are {1, 2, 4, 6}, or the first information indicates data packets whose sequence numbers are {1, 2, 3, 4, 5, 6, 7}, the first information may include the sequence number {1}. In the indication manner in which the information includes the index of the 1^{st} data packet, it is equivalent to that the first information indicates the data packet whose sequence number is {1} and all other data packets that are after the data packet whose sequence number is {1}. For example, the first information indicates the data packets whose sequence numbers are {1, 2, 3, 4, 5, 6, 7}.

Alternatively, if a piece of information needs to indicate M data packets, still another indication manner is that the information may include an index of a 1^{st} data packet in the M data packets, and indicate receiving statuses of the remaining data packets in the M data packets. For example, if the first information indicates data packets whose sequence numbers are {1, 2, 3, 4, 5, 6, 7}, the first information may include the sequence number {1}, and the first information may include a bitmap (bitmap). A quantity of bits included in the bitmap is the same as a quantity of bits of the remaining data packets in the M data packets. For example, six bits are included in the bitmap, and the six bits are in one-to-one correspondence with the data packets whose sequence numbers are {2, 3, 4, 5, 6, 7}. Alternatively, a quantity of bits included in the bitmap is a multiple of eight. For example, eight bits are included in the bitmap, and the first six bits are in one-to-one correspondence with the data packets whose sequence numbers are {2, 3, 4, 5, 6, 7}. A value of each bit may indicate a receiving status of a corresponding data packet. For example, if a value of one bit in the bitmap is "0", it indicates that a data packet corresponding to the bit fails to be received; or if a value of one bit is "1", it indicates that a data packet corresponding to the bit is successfully received. For example, if the second information is the PDCP status report, the second information may indicate, in this manner, the data packet that is successfully received by the remote device and/or the data packet that fails to be received by the remote device. The PDCP status report includes count or sequence number information, and a bitmap. The status report indicates, by using the included count or sequence number information, a count corresponding to a 1^{st} data packet that fails to be received, for example, a first missing count (first missing count, FMC), or indicates a sequence number corresponding to the 1^{st} data packet that fails to be received, for example, a first missing sequence number (first missing SN, FMS). In this case, it indicates that all other data packets before the data packet indicated by the information are successfully received. A length of the bitmap included in the PDCP status report may be a multiple of eight, and the bitmap may indicate receiving statuses of data packets that are after the 1^{st} data packet that fails to be received. For example, the count of the 1^{st} data packet that fails to be received is {3}, in other words, all other data packets that are before the data packet whose count is {3} are successfully received, and counts of data packets that are successfully received and that are after the data packet whose count is {3} are {5, 9}. In this case, the FMC=3. Because all other data packets that are after the data packet whose count is {9} are not successfully received, the length of the bitmap is 8, and "0100 0100" may indicate that the data packets whose counts are {5, 9} are successfully received.

The first information and the second information may have a plurality of implementations. The following describes the implementations by using examples.

### 1. Implementation 1 of the second information

The second information indicates the data packet that fails to be received by the remote device. For example, the second information indicates only the data packet that fails to be received by the remote device. In this indication manner, the second information may indicate only the data packet that fails to be received by the remote device. For example, if the remote device fails to receive the data packets whose sequence numbers are {1, 2, 4, 6}, the second information may indicate the data packets whose sequence numbers are {1, 2, 4, 6}. For example, the second information may include the sequence numbers {1, 2, 4, 6}. In embodiments of this application, a serial number of a data packet is, for example, a sequence number (sequence number, SN) of the data packet, or a count (count) of the data packet. For example, the "sequence number" described in embodiments of this application may alternatively be replaced with the "serial number" or the "count". A count of a data packet may be determined based on an HFN and an SN of the data packet. For example, a count of one data packet may be constituted by an HFN and an SN of the data packet.

In implementation 1 of the second information, the first information may be the same as the second information. For example, after receiving the second information, the target network device may forward the second information to the source network device. In this case, the first information is the same as the second information. In this case, the first information may indicate the receiving status of the data packet of the remote device.

Alternatively, the first information may be different from the second information.

For example, the second information indicates only the data packet that fails to be received by the remote device, and the first information may indicate a 1^{st} data packet in data packets that fail to be received by the remote device, to indicate all data packets starting from the 1^{st} data packet to a last data packet of the remote device. In this case, the first information may indicate the receiving status of the data packet of the remote device. For example, the second information includes the sequence numbers {1, 2, 4, 6}, to indicate that the data packets whose sequence numbers are {1, 2, 4, 6} fail to be received; and the first information may include the sequence number {1}, to indicate all the data packets starting from the data packet whose sequence number is {1} to the last data packet of the remote device. The last data packet of the remote device is, for example, a last data packet that has been sent by the source network device to the remote device through a first transmission path, or a last data packet in data packets that are to be sent by the source network device to the remote device through the first transmission path. In this case, the last data packet may have been sent to the remote device through the first transmission path, or may not have been sent to the remote device through the first transmission path. In this case, in addition to the data packet that fails to be received by the remote device, the data packets indicated by the first information may further include the data packet that is successfully received by the remote device and/or a data packet that has not been received by the remote device. The data packet that has not been received by the remote device is, for example, a data packet that has not been sent to the remote device, and may include a data packet that has been associated with a sequence number and/or a data packet that has not been associated with a sequence number.

For another example, after receiving the second information, the target network device may further determine the first information based on the second information and a data packet that has been stored in the target network device. In this case, the first information may indicate the receiving status of the data packet of the remote device and/or the receiving status of the data packet of the target network device. For example, the target network device may determine whether the data packet that has been stored in the target network device exists in the data packets indicated by the second information. If the data packet that has been stored in the target network device exists in the data packets indicated by the second information, the first information may not indicate the data packet that has been stored in the target network device, but indicate a data packet that is not stored in the target network device. The data packet that has been stored in the target network device is, for example, a data packet that has been received by the target network device from the source network device through data forwarding (data forwarding). For example, the second information indicates the receiving status of the data packet of the remote device. For example, the second information indicates that the data packets whose sequence numbers are {1, 2, 4, 6} and a data packet that is after the data packet whose sequence number is {6} fail to be received. After receiving the second information, the target network device determines that the data packets whose sequence numbers are {4, 6} and the data packet that is after the data packet whose sequence number is {6} have been obtained through data forwarding. In this case, the first information may indicate the data packets whose sequence numbers are {1, 2}, or the first information may indicate the data packet whose sequence number is {1}, to indicate all data packets starting from the data packet whose sequence number is {1} to a last data packet of the remote device, or indicate all data packets starting from the data packet whose sequence number is {1} to a 1^{st} data packet that has been forwarded by the source network device to the target network device.

### 2. Implementation 2 of the second information

The second information indicates the data packet that is successfully received by the remote device. For example, the second information indicates only the data packet that is successfully received by the remote device. In this indication manner, the second information may indicate only the data packet that is successfully received by the remote device. For example, if the remote device fails to receive the data packets whose sequence numbers are {1, 2, 4, 6}, but successfully receives data packets whose sequence numbers are {0, 3, 5, 7}, the second information may indicate the data packets whose sequence numbers are {0, 3, 5, 7}. For example, the second information may include the sequence numbers {0, 3, 5, 7}.

In implementation 2 of the second information, the first information may be the same as the second information. For example, after receiving the second information, the target network device may forward the second information to the source network device. In this case, the first information is the same as the second information. In this case, the first information may indicate the receiving status of the data packet of the remote device.

Alternatively, the first information may be different from the second information.

For example, the second information indicates only the data packet that is successfully received by the remote device, and the first information may indicate the data packet that fails to be received by the remote device. In this case, the first information may indicate the receiving status of the data packet of the remote device. For example, the second information includes the sequence numbers {0, 3, 5, 7}, to indicate that the data packets whose sequence numbers are {0, 3, 5, 7} are successfully received; and the first information may include the sequence numbers {1, 2, 4, 6}, to indicate the data packets whose sequence numbers are {1, 2, 4, 6}.

For another example, the second information indicates only the data packet that is successfully received by the remote device, and the first information may indicate a 1^{st} data packet in data packets that fail to be received by the remote device, to indicate all data packets starting from the 1^{st} data packet to a last data packet of the remote device. In this case, the first information may indicate the receiving status of the data packet of the remote device. For example, the second information includes the sequence numbers {0, 3, 5, 7}, to indicate that the data packets whose sequence numbers are {0, 3, 5, 7} are successfully received. In this case, the target network device may determine that the remote device fails to receive the data packets whose sequence numbers are {1, 2, 4, 6}; and the first information may include the sequence number {1}, to indicate all the data packets starting from the data packet whose sequence number is {1} to the last data packet of the remote device. For explanations of the last data packet of the remote device and content indicated by the first information, refer to the foregoing descriptions.

For another example, after receiving the second information, the target network device may further determine the first information based on the second information and a data packet that has been stored in the target network device. In this case, the first information may indicate the receiving status of the data packet of the remote device and/or the receiving status of the data packet of the target network device. For example, the target network device may determine whether the data packet that has been stored in the target network device exists in data packets that are not indicated by the second information. If the data packet that has been stored in the target network device exists in the data packets that are not indicated by the second information, the first information may not indicate the data packet that has been stored in the target network device, but indicate a data packet that is not stored in the target network device. The data packet that has been stored in the target network device is, for example, a data packet that has been received by the target network device from the source network device through data forwarding. For example, the second information indicates only the data packet that is successfully received by the remote device. For example, the second information includes the sequence numbers {0, 3, 5, 7}, to indicate that the data packets whose sequence numbers are {0, 3, 5, 7} are successfully received. In this case, the target network device may determine that the remote device fails to receive the data packets whose sequence numbers are {1, 2, 4, 6} and a data packet that is after the data packet whose sequence number is {6}. For example, the target network device determines that the data packets whose sequence numbers are {4, 6} and the data packet that is after the data packet whose sequence number is {6} have been obtained through data forwarding. In this case, the first information may indicate the data packets whose sequence numbers are {1, 2}. Alternatively, the first information may indicate the data packet whose sequence number is {1}, to indicate all data packets starting from the data packet whose sequence number is {1} to a last data packet of the remote device, or indicate all data packets starting from the data packet whose sequence number is {1} to all data packets prior to a 1^{st} data packet that has been forwarded by the source network device to the target network device.

### 3. Implementation 3 of the second information

The second information indicates one or more of the following: the data packet that fails to be received by the remote device, the data packet that is successfully received by the remote device, or a data packet that has not been received by the remote device. For example, the second information may indicate a 1^{st} data packet in data packets that fail to be received by the remote device, to indicate all data packets starting from the 1^{st} data packet to a last data packet of the remote device. For explanations of the last data packet of the remote device, refer to the foregoing descriptions. For example, if the remote device fails to receive the data packets whose sequence numbers are {1, 2, 4, 6}, the second information may indicate the data packet whose sequence number is {1}. For example, the second information may include the sequence number {1}, to indicate the data packets whose sequence numbers are {1, 2, 3, 4, 5, 6, 7}. The data packet whose sequence number is {7} is, for example, a last data packet that has been sent by the source network device to the remote device, or a last data packet in data packets that are to be sent by the source network device to the remote device. If the second information indicates the 1^{st} data packet in the data packets that fail to be received by the remote device, in addition to the data packets that fail to be received by the remote device, the data packets indicated by the second information may further include the data packet that is successfully received by the remote device and/or the data packet that has not been received by the remote device. The data packet that has not been received by the remote device is, for example, a data packet that has not been sent to the remote device, and may include a data packet that has been associated with a sequence number and/or a data packet that has not been associated with a sequence number.

For another example, the second information indicates the receiving status of the data packet of the remote device. For example, the second information is the PDCP status report, or the second information is included in an RRC reconfiguration complete message. For example, the second information included in the RRC reconfiguration complete message indicates a receiving status corresponding to a DRB ID. For example, the second information indicates the receiving status of the 1^{st} data packet that fails to be received by the remote device and the receiving statuses of the data packets that are after the 1^{st} data packet that fails to be received. For example, the second information indicates that the FMC=3, and the bitmap is "0100 0100". Under this indication, the second information may indicate that the count of the 1^{st} data packet that fails to be received by the remote device is {3}, in other words, all the data packets that are before the data packet whose count is {3} are successfully received, the counts of the data packets that are successfully received and that are after the data packet whose count is {3} are {5, 9}, and the remaining data packets are not successfully received. For another example, the second information indicates that the FMS=3, and the bitmap is "0100 0100". Under this indication, the second information may indicate that the sequence number of the 1^{st} data packet that fails to be received by the remote device is {3}, in other words, all data packets that are before the data packet whose sequence number is {3} are successfully received, sequence numbers of data packets that are successfully received and that are after the data packet whose sequence number is {3} are {5, 9}, and the remaining data packets are not successfully received. The data packet that fails to be received may include a data packet that has been associated with a sequence number and/or a data packet that has not been associated with a sequence number. For another example, the second information further includes a DRB ID. For example, if the second information indicates that the DRB ID=3, and the FMC=3, it indicates that for a DRB that is of the remote device and whose DRB ID is 3, all other data packets that are before the data packet whose count is {3} are successfully received.

In implementation 3 of the second information, the first information may be the same as the second information. For example, after receiving the second information, the target network device may forward the second information to the source network device. In this case, the first information is the same as the second information. In this case, the first information may indicate the receiving status of the data packet of the remote device. Compared with the second information, the first information may further include the DRB ID additionally, to indicate a receiving status of the DRB corresponding to the remote device.

Alternatively, the first information may be different from the second information.

For example, after receiving the second information, the target network device may determine which data packets in the data packets indicated by the second information are data packets that fail to be received by the remote device. For example, in addition to including the sequence numbers of the data packets, the second information may further indicate which data packets are data packets that fail to be received and/or indicate which data packets are data packets that are successfully received. In this case, the first information may indicate the data packet that fails to be received by the remote device, in other words, the second information may indicate a receiving status of the remote device for a data packet through a first transmission path. For example, the second information indicates that the FMC=3, and the bitmap is "0100 0100". Under this indication, the second information may indicate that the count of the 1^{st} data packet that fails to be received is {3}, in other words, all the data packets that are before the data packet whose count is {3} are successfully received, the counts of the data packets that are successfully received and that are after the data packet are {5, 9}, and the remaining data packets are not successfully received. For another example, the second information indicates that the FMS=3, and the bitmap is "0100 0100". Under this indication, the second information may indicate that the sequence number of the 1^{st} data packet that fails to be received is {3}, in other words, all data packets that are before the data packet whose sequence number is {3} are successfully received, sequence numbers of data packets that are successfully received and that are after the data packet whose sequence number is {3} are {5, 9}, and the remaining data packets are not successfully received. The data packet that fails to be received may include a data packet that has been associated with a sequence number and/or a data packet that has not been associated with a sequence number. For another example, the second information further includes a DRB ID. For example, if the second information indicates that the DRB ID=3, and the FMC=3, it may indicate that for a DRB that is of the remote device and whose DRB ID is 3, all data packets that are before the data packet whose count is {3} are successfully received.

After receiving the second information, if the target network device determines that data packets whose sequence numbers are {3, 4, 6, 7, 8, 10} and a data packet that is after the data packet whose sequence number is {10} are data packets that fail to be received by the remote device, the first information may indicate the data packet whose sequence number is {3}, to indicate all data packets starting from the data packet whose sequence number is {3} to a last data packet of the remote device. Alternatively, the first information may indicate the data packet whose sequence number is {3}, to indicate all data packets starting from the data packet whose sequence number is {3} to a 1^{st} data packet that has been forwarded by the source network device to the target network device. In the foregoing two processing manners of the target network device, in addition to the data packet that fails to be received by the remote device, the first information may further indicate the data packet that is successfully received by the remote device and/or a data packet that has not received by the remote device. Alternatively, the first information may indicate the data packets whose sequence numbers are {3, 4, 6, 7, 8, 10}. In this processing manner, the first information may indicate only the data packet that fails to be received by the remote device. Alternatively, the first information may indicate the data packets whose sequence numbers are {3, 4, 6, 7, 8, 10} and the data packet that is after the data packet whose sequence number is {10}. In this processing manner, the first information may indicate the data packet that fails to be received by the remote device and/or the data packet that has not received by the remote device.

For another example, after receiving the second information, the target network device may further determine the first information based on the second information and a data packet that has been stored in the target network device. In this case, the first information may indicate the receiving status of the data packet of the remote device and/or the receiving status of the data packet of the target network device. For example, the target network device may determine whether the data packet that has been stored in the target network device exists in the data packets indicated by the second information. If the data packet that has been stored in the target network device exists in the data packets indicated by the second information, the first information may not indicate the data packet that has been stored in the target network device, but indicate a data packet that is not stored in the target network device. The data packet that has been stored in the target network device is, for example, a data packet that has been received by the target network device from the source network device through data forwarding (data forwarding). For example, the second information indicates a 1^{st} data packet in the data packets that fail to be received by the remote device, to indicate that all data packets starting from the 1^{st} data packet to a last data packet of the remote device are not successfully received. For example, the second information includes the sequence number {1}, to indicate that all data packets starting from the data packet whose sequence number is {1} to the last data packet of the remote device are not successfully received. After receiving the second information, the target network device determines that the data packet whose sequence number is {4} and a data packet that is after the data packet whose sequence number is {4} have been received through data forwarding. In this case, the first information may indicate the data packet whose sequence number is {1}, to indicate all data packets starting from the data packet whose sequence number is {1} to the last data packet of the remote device. Alternatively, the first information may indicate the data packet whose sequence number is {1}, to indicate all data packets starting from the data packet whose sequence number is {1} to a previous data packet of a 1^{st} data packet that has been forwarded by the source network device to the target network device. For another example, the second information includes the sequence number {1}, to indicate that all data packets starting from the data packet whose sequence number is {1} to a last data packet of the remote device are not successfully received. After receiving the second information, the target network device determines that the data packet whose sequence number is {1} and a data packet that is after the data packet whose sequence number is {1} are data packets that fail to be received by the remote device, and determines that the data packet whose sequence number is {4} and a data packet that is after the data packet whose sequence number is {4} that are of the remote device and that are forwarded by the source network device have been received through data forwarding. In this case, the first information may indicate the data packets whose sequence numbers are {1, 2, 3}, to indicate all data packets starting from the data packet whose sequence number is {1} to the last data packet of the remote device. Alternatively, the first information may indicate the data packets whose sequence numbers are {1, 2, 3}. Alternatively, the first information may include a serial number (for example, a sequence number or a count) of a data packet and a bitmap, where the serial number of the data packet may indicate a sequence number or a count of a 1^{st} data packet that needs to be forwarded, and the bitmap indicates a data forwarding status of a data packet that is after the data packet. For example, if data packets that need to be forwarded are the data packets whose sequence numbers are {1, 2, 3}, the serial number of the data packet indicated by the first information is {1}, and the bitmap is "1100 0000". In this way, it may indicate that data forwarding also needs to be performed on the data packets whose sequence numbers are {2, 3}. Optionally, the first information may further include DRB ID information, to indicate information about a data radio bearer on which data forwarding needs to be performed.

S303: The source network device sends a first data packet to the target network device. Correspondingly, the target network device receives the first data packet from the source network device.

The first data packet may include one or more data packets. The first data packet is, for example, the data packet of the remote device, and the first data packet may be determined based on the first information.

In implementation 1 of the first data packet, the first data packet may include all the data packets indicated by the first information. For example, if the first information indicates the data packet whose sequence number is {1} and the data packet that is after the data packet whose sequence number is {1}, the first data packet may include all the data packets starting from the data packet whose sequence number is {1} to the last data packet of the remote device, for example, include the data packets whose sequence numbers are {1, 2, 3, 4, 5, 6, 7}, or include the data packet whose sequence number is {1} and the data packet that is after the data packet whose sequence number is {1}. The data packet that is after the data packet whose sequence number is {1} includes a data packet that is not associated with a sequence number. For another example, if the first information indicates the data packets whose sequence numbers are {1, 2, 4, 6}, the first data packet may include the data packets whose sequence numbers are {1, 2, 4, 6}. For still another example, if the first information indicates the data packets whose sequence numbers are {1, 2, 4, 6}, the first data packet may include all the data packets starting from the data packet whose sequence number is {1} to the last data packet of the remote device, for example, include the data packets whose sequence numbers are {1, 2, 3, 4, 5, 6, 7}. For still another example, if the first information indicates that a serial number of a data packet is {1}, and the bitmap is "1100 0000", the first data packet includes the data packets with sequence numbers {1, 2, 3} that need to be forwarded and that are indicated by the first information.

In implementation 2 of the first data packet, the first data packet may include some of the data packets indicated by the first information. For example, if the first information indicates the data packet whose sequence number is {1} and the data packet that is after the data packet whose sequence number is {1}, and the source network device determines that the data packet whose sequence number is {4} and the data packet that is after the data packet whose sequence number is {4} have been sent to the target network device, the first data packet may include all the data packets starting from the data packet whose sequence number is {1} to the previous data packet of the 1^{st} data packet that has been forwarded by the source network device to the target network device, for example, include the data packets whose sequence numbers are {1, 2, 3}. For another example, if the first information indicates the data packets whose sequence numbers are {1, 2, 4, 6}, and the source network device determines that the data packet whose sequence number is {6} and the data packet that is after the data packet whose sequence number is {6} have been sent to the target network device through data forwarding, the first data packet may include the data packets whose sequence numbers are {1, 2, 4}. For still another example, if the first information indicates the data packet whose sequence number is {1}, or indicates the data packets whose sequence numbers are {1, 2, 3, 4, 5, 6, 7}, and the first information indicates the data packet that fails to be received and/or the data packet that is successfully received in the data packets, for example, the first information indicates that the data packets whose sequence numbers are {1, 2, 4, 6} are data packets that fail to be received and/or indicates that the data packets whose sequence numbers are {0, 3, 5, 7} are data packets that are successfully received, the first information may include the data packets whose sequence numbers are {1, 2, 4, 6}, or the first information may include the data packets whose sequence numbers are {1, 2, 3, 4, 5, 6, 7}. For yet another example, if the first information indicates the data packet whose sequence number is {1}, or indicates the data packets whose sequence numbers are {1, 2, 3, 4, 5, 6, 7}, the first information indicates the data packet that fails to be received and/or the data packet that is successfully received in the data packets, for example, the first information indicates that the data packets whose sequence numbers are {1, 2, 4, 6} are data packets that fail to be received and/or indicates that the data packets whose sequence numbers are {0, 3, 5, 7} are data packets that are successfully received, and the source network device determines that the data packet whose sequence number is {1} has been sent to the target network device, the first information may include the data packets whose sequence numbers are {2, 4, 6}, or the first information may include the data packets whose sequence numbers are {2, 3, 4, 5, 6, 7}.

In implementation 3 of the first data packet, the first data packet may include all data packets that are not indicated by the first information. This implementation is applicable to a case in which the first information indicates the data packet that is successfully received by the remote device. For example, if the first information indicates the data packets whose sequence numbers are {0, 3, 5, 7}, the first data packet may include the data packets whose sequence numbers are {1, 2, 4, 6}; or the first data packet may include consecutive data packets starting from the 1^{st} data packet that fails to be received by the remote device. For example, the first data packet may include the data packets whose sequence numbers are {1, 2, 3, 4, 5, 6, 7}.

In implementation 4 of the first data packet, the first data packet may include some of data packets that are not indicated by the first information. This implementation is applicable to a case in which the first information indicates the data packet that is successfully received by the remote device. For example, if the first information indicates the data packets whose sequence numbers are {0, 3, 5, 7}, and the source network device determines that the data packet whose sequence number is {1} has been sent to the target network device, the first data packet may include the data packets whose sequence numbers are {2, 4, 6}.

In implementation 5 of the first data packet, the first data packet includes all the data packets indicated by the first information. For example, the first information indicates the data packets whose serial numbers are {1, 2, 3}. For example, the first information may perform indication by using a serial number of a data packet and a bitmap. In this case, the first information indicates that a serial number of a data packet is {1}, indicates that the 1^{st} data packet that needs to be forwarded is the data packet whose serial number is {1} and the bitmap is "1100 0000", and indicates that data packets that are after the 1^{st} data packet that needs to be forwarded are data packets whose sequence numbers are {2, 3}. In this way, it is determined that the first data packet includes the data packets with sequence numbers {1, 2, 3} that need to be forwarded and that are indicated by the first information.

In implementation 6 of the first data packet, the first data packet is determined by the source network device based on all the data packets indicated by the first information. For example, the first information indicates that the FMC=3, and the bitmap is "0100 0100". It may indicate that the receiving status of the remote device is that all the data packets that are before the data packet whose sequence number is {3} are successfully received, and after the data packet whose sequence number is {3}, only the data packets whose sequence numbers are {5, 9} are successfully received. On a basis that the data packet whose sequence number is {10} and the data packet that is after the data packet whose sequence number is {10} have been forwarded to the target network device, the first data packet may include data packets (indicated by using the first information) that are not successfully received by the remote device and that are not forwarded by the source network device to the target network device, that is, the data packets whose sequence numbers are {3, 4, 6, 7, 8}. For another example, the first information indicates that the FMC=3, and the bitmap is "0100 0100". It indicates that the receiving status of the remote device is that all the data packets that are before the data packet whose sequence number is {3} are successfully received, and after the data packet whose sequence number is {3}, only the data packets whose sequence numbers are {5, 9} are successfully received. If no data packet is forwarded to the target network device, the first data packet may include the data packets that are not successfully received by the remote device, that is, the data packets whose sequence numbers are {3, 4, 6, 7, 8, 10} and the data packet that is after the data packet whose sequence number is {10}, where the data packet that is after the data packet whose sequence number is {10} may include a data packet that is associated with an SN or a data packet that is not associated with an SN.

In implementation 7 of the first data packet, the first data packet is determined by the source network device based on all the data packets indicated by the first information. For example, the first information indicates that the FMC=3, and the bitmap is "0100 0100". It may indicate that the receiving status of the remote device is that all the data packets that are before the data packet whose sequence number is {3} are successfully received, and after the data packet whose sequence number is {3}, only the data packets whose sequence numbers are {5, 9} are successfully received. On a basis that the data packet whose sequence number is {10} and the data packet that is after the data packet whose sequence number is {10} have been forwarded to the target network device, the first data packet may include all the data packets, of the remote device, starting from the 1^{st} data packet (indicated by using the first information) that fails to be received by the remote device. For example, in addition to the data packet that fails to be received by the remote device, the first data packet may further include the data packet that is successfully received by the remote device and/or the data packet that has not been sent by the source network device to the remote device. For example, the first data packet may include data packets whose sequence numbers are {3, 4, 5, 6, 7, 8, 9, 10} and the data packet that is after the data packet whose sequence number is {10}. For another example, the first information indicates that the FMC=3, and the bitmap is "0100 0100". It indicates that the receiving status of the remote device is that all the data packets that are before the data packet whose sequence number is {3} are successfully received, and after the data packet whose sequence number is {3}, only the data packets whose sequence numbers are {5, 9} are successfully received. If no data packet is forwarded to the target network device, the first data packet may include all the data packets, of the remote device, starting from the 1^{st} data packet that fails to be received by the remote device. For example, the first data packet may include the data packets whose sequence numbers are {3, 4, 5, 6, 7, 8, 9, 10} and the data packet that is after the data packet whose sequence number is {10}. For example, in addition to the data packet that fails to be received by the remote device, the first data packet may further include the data packet that is successfully received by the remote device and/or the data packet that has not been sent by the source network device to the remote device. The data packet that has not been sent by the source network device to the remote device may include a data packet that is associated with an SN and/or a data packet that is not associated with an SN.

This embodiment of this application may relate to a transmission path switching process of the remote device. Therefore, optionally, before S302, the method may further include S304 to S311.

S304: The remote device communicates with the source network device through a first relay device. For example, the remote device may send an uplink (uplink, UL) data packet to the source network device through the first relay device, and/or the remote device may receive a downlink (downlink, DL) data packet from the source network device through the first relay device. In FIG. 3, there is a circle corresponding to the first relay device on an arrow of S304, and it indicates that communication between the remote device and the source network device is forwarded through the first relay device. In the accompanying drawings corresponding to embodiments of this application, a meaning of a circle corresponding to a device on an arrow is similar, and details are not described below.

S305: Perform a measurement process for the remote device.

For example, the source network device sends measurement configuration (measurement configuration) information to the remote device through the first relay device. Correspondingly, the remote device receives the measurement configuration information from the source network device through the first relay device. The measurement configuration information may be used to configure measurement information for the remote device, and the remote device may perform measurement based on the measurement information. The measurement information may include information used to perform Uu interface measurement, and/or information used to perform sidelink (sidelink, SL) measurement.

After performing measurement, the remote device may obtain a measurement report (measurement report). The remote device may send the measurement report to the source network device through the first relay device. In this case, the source network device may receive the measurement report from the remote device through the first relay device. The measurement report may include a Uu interface measurement report (for example, including quality information of at least one cell) and/or a sidelink measurement report. The sidelink measurement report may include a result of measurement performed by the remote device on one or more other terminal devices, for example, include quality information of a sidelink between the remote device and the one or more other terminal devices. The one or more other terminal devices may be used as a candidate of a relay device of the remote device.

S306: The source network device and/or the target network device determine/determines that the remote device performs transmission path switching. Alternatively, the source network device or the target network device determines that the remote device switches to a second transmission path. For example, a transmission path through which the remote device is connected to the source network device through the first relay device is the first transmission path. The second transmission path is, for example, a transmission path through which the remote device is directly connected to the target network device (for example, through a Uu interface), or a transmission path through which the remote device is connected to the target network device through a second relay device.

For example, in S306, the source network device may determine, based on the measurement report from the remote device, that the remote device switches to the second transmission path. After S306, the source network device may send a switching request to the target network device, to request to switch the remote device to the second transmission path. After receiving the switching request from the source network device, the target network device may perform access control. If it is determined that the remote device can switch to the second transmission path, the target network device may send a switching request confirmation message to the source network device, to indicate that the remote device is allowed to switch to the second transmission path. After receiving the switching request confirmation message, the source network device may perform S307, to be specific, send a switching command to the remote device through the first relay device, to indicate the remote device to switch to the second transmission path. After receiving the switching command through the first relay device, the remote device may switch to the second transmission path. Optionally, the switching command is, for example, an RRC reconfiguration message (RRC reconfiguration message). In embodiments of this application, the "switching command" may also be referred to as a "path switching command" or the like.

Alternatively, before S306, the source network device may send the measurement report from the remote device to at least one network device, where the at least one network device may include the target network device. For example, the source network device may send the switching command to the at least one network device, and the switching command may include the measurement report. A network device that receives the measurement report may determine a second transmission path based on the measurement report. For example, the second transmission path is determined as a path through which the remote device is directly connected to the network device or an indirect path through which the remote device is connected to the network device through the second relay device. For example, the at least one network device may send a determining result to the source network device, and the source network device may obtain at least one determining result, where one of the at least one determining result may indicate a second transmission path determined by a corresponding network device. For example, the network device may send the determining result to the source network device via the switching request confirmation message. The source network device selects one second transmission path from at least one second transmission path. After selecting the second transmission path, the source network device may perform S307. After receiving the switching command, the remote device may switch to the second transmission path. In this case, it may be considered that the second transmission path is jointly determined by the source network device and the target network device.

Alternatively, before S306, the source network device does not need to send the measurement report from the remote device to excessive network devices, but sends the measurement report to the target network device. The target network device may determine a second transmission path based on the measurement report. For example, the second transmission path is determined as a path through which the remote device is directly connected to the network device or an indirect path through which the remote device is connected to the network device through the second relay device. The target network device may send a determining result to the source network device, and the determining result may indicate the second transmission path. For example, the target network device may send the determining result to the source network device via the switching request confirmation message. The source network device may determine the second transmission path based on the determining result. After determining the second transmission path, or after receiving the determining result, the source network device may perform S307. After receiving the switching command, the remote device may switch to the second transmission path. In this case, it may be considered that the second transmission path is determined by the target network device.

S308: The source network device forwards data to the target network device. Correspondingly, the target network device receives the data from the source network device.

For example, the source network device may forward a third data packet to the target network device, where the third data packet may include a data packet for which the source network device receives no receiving feedback (or a data packet that a receiving feedback indicates a receiving failure), and/or include the data packet that has not been sent by the source network device to the remote device. The receiving feedback is, for example, an RLC feedback from the first relay device. For example, the source network device may forward, to the target network device, a PDCP service data unit (service data unit, SDU) corresponding to a PDCP protocol data unit (protocol data unit, PDU) that receives no RLC feedback from the first relay device. The data packet that has not been sent by the source network device to the remote device may include a data packet that has been associated with an SN and/or a data packet that has not been associated with an SN. S308 may be considered as a data forwarding (data forwarding) process.

If the data packet that has not been sent by the source network device to the remote device includes the data packet that is not associated with an SN, optionally, the method may further include: S309: The source network device may send third information to the target network device. Correspondingly, the target network device receives the third information from the source network device. S309 may be performed before S308, or may be performed after S308, or may be performed at the same time with S308. The third information may indicate a sequence number of a 1^{st} data packet that is not associated with an SN, for example, indicate an SN of the 1^{st} data packet that is not associated with an SN, or indicate a count of the 1^{st} data packet that is not associated with an SN. After receiving the third information, the target network device may associate an SN with each data packet that is not associated with an SN. A count of one data packet includes a hyper frame number (hyper frame number, HFN) and an SN of the data packet. Optionally, the third information may be a sequence number status transfer (SN status transfer) message, or the third information may be included in the sequence number status transfer message.

S308 may alternatively not be performed, for example, if S308 is not performed, a data forwarding process in S303 may be considered as a late data forwarding (late data forwarding) process. If S308 is performed, a data forwarding process in S303 may be considered as a supplementary data forwarding process. If S308 is not performed, in the late data forwarding process, the data may be forwarded to the target network device after the remote device successfully performs transmission path switching, in other words, the data forwarding process may be performed in a transmission path switching complete phase. For example, late data forwarding may be performed in S303. As described in S303, the first data packet may include data packets associated with the first information, for example, include some or all of the data packets indicated by the first information, or include some or all of the data packets that are not indicated by the first information (where for example, if the first information indicates the data packet that is successfully received, the first data packet may include the data packet that fails to be received). In addition, the first data packet may further include the third data packet, and the third data packet may include one or more data packets. For example, the third data packet includes the data packet for which the source network device receives no receiving feedback, and/or includes the data packet that has not been sent by the source network device to the remote device. It is equivalent to that S308 and S309 do not need to be performed, and data forwarding is performed in S303.

Optionally, if S308 is not performed, and S309 is performed, S309 may be performed before S303, or may be performed after S303, or may be performed at the same time with S303.

S310: The remote device establishes the second transmission path with the target network device based on the switching command. If S308 is performed, S310 may be performed before S308, or may be performed after S308, or may be performed at the same time with S308. In addition, if S309 is performed, S310 may be performed before S309, or may be performed after S309, or may be performed at the same time with S309.

For example, if the second transmission path is a direct path, the remote device may perform a random access procedure, to access the target network device. Alternatively, if the second transmission path is an indirect path, the remote device may establish an RRC connection to the target network device through the second relay device.

S311: The remote device sends an RRC reconfiguration complete message (RRC reconfiguration complete message) to the target network device. Correspondingly, the target network device receives the RRC reconfiguration complete message from the remote device. The RRC reconfiguration complete message may indicate that the remote device successfully performs transmission path switching, or indicate that the remote device is successfully handed over to the target network device. Optionally, the RRC reconfiguration complete message may include the second information. In this case, the second information further includes DRB ID information.

Optionally, after S303, the method may further include: S312: The target network device sends a second data packet to the remote device. Correspondingly, the remote device receives the second data packet from the target network device. The second data packet may include one or more data packets, and the second data packet may be determined based on the first data packet. For example, the second data packet may include the data packet that fails to be received or the data packet that fails to be received by the remote device.

In an optional implementation, the second data packet is the first data packet, in other words, the second data packet is the same as the first data packet. For example, the second information indicates only the data packet that fails to be received by the remote device. The first information is the same as the second information. In this case, the first data packet may include the data packet that fails to be received by the remote device, and the second data packet may be the same as the first data packet. For example, the target network device may forward the first data packet from the source network device to the remote device. Alternatively, the second information indicates only the data packet that is successfully received by the remote device. The first information is the same as the second information. The source network device may determine, based on the first information, the data packet that fails to be received by the remote device. In this case, the first data packet may include the data packet that fails to be received by the remote device, and the second data packet may be the same as the first data packet. For example, the target network device may forward the first data packet from the source network device to the remote device. Alternatively, the second information may indicate the data packet that is successfully received by the remote device and the data packet that fails to be received by the remote device (for example, the second information is the PDCP status report). The first information is the same as the second information, or the first information may indicate the data packet that is successfully received by the remote device or the data packet that fails to be received by the remote device. The source network device may determine, based on the first information, the data packet that fails to be received by the remote device. In this case, the first data packet may include the data packet that fails to be received by the remote data device, and the second data packet may be the same as the first data packet. For example, the target network device may forward the first data packet from the source network device to the remote device.

In another optional implementation, the second data packet is a part of the first data packet, in other words, the second data packet may include a part of the first data packet. For example, the second information indicates only the data packet that fails to be received by the remote device. The first information is the same as the second information. In this case, the first data packet may include a plurality of consecutive data packets starting from the 1^{st} data packet that fails to be received by the remote data device, and the target network device may select, from the first data packet, the data packet that fails to be received by the remote device as the second data packet. Alternatively, the second information indicates only the data packet that is successfully received by the remote device. The first information is the same as the second information. The source network device may determine, based on the first information, the data packet that fails to be received by the remote device. In this case, the first data packet may include a plurality of consecutive data packets starting from the 1^{st} data packet that fails to be received by the remote device, and the target network device may select, from the first data packet, the data packet that fails to be received by the remote device as the second data packet. Alternatively, the second information may indicate the data packet that is successfully received by the remote device and the data packet that fails to be received by the remote device (for example, the second information is the PDCP status report). The first information is the same as the second information, or the first information may indicate the data packet that is successfully received by the remote device or the data packet that fails to be received by the remote device. The source network device may determine, based on the first information, the data packet that fails to be received by the remote device. In this case, the first data packet may include a plurality of consecutive data packets starting from the 1^{st} data packet that fails to be received by the remote device, and the target network device may select, from the first data packet, the data packet that fails to be received by the remote device as the second data packet.

In still another optional implementation, the first data packet is a part of the second data packet, in other words, the first data packet may include a part of the second data packet. For example, the second information indicates the data packets that fail to be received by the remote device, and the target network device determines that some of the data packets indicated by the second information have been stored in the target network device. In this case, the first information may indicate remaining data packets other than the data packets. In this case, the first data packet may include the data packets indicated by the first information, and the target network device may use the first data packet and the currently stored data packets as the second data packet. Alternatively, the second information indicates only the data packets that are successfully received by the remote device. Based on this, the target network device determines the data packet that fails to be received by the remote device, and determines that some of the data packets indicated by the second information have been stored in the target network device. In this case, the first information may indicate remaining data packets other than the data packets. In this case, the first data packet may include the data packets indicated by the first information, and the target network device may use the first data packet and the currently stored data packets as the second data packet. Alternatively, the second information may indicate the data packet that is successfully received by the remote device and the data packet that fails to be received by the remote device (for example, the second information is the PDCP status report). Based on this, the target network device determines the data packet that fails to be received by the remote device, and determines that some of the data packets indicated by the second information have been stored in the target network device. In this case, the first information may indicate remaining data packets other than the data packets. In this case, the first data packet may include the data packets indicated by the first information, and the target network device may use the first data packet and the currently stored data packets as the second data packet.

In this embodiment of this application, after accessing the target network device, the remote device may send the second information to the target network device, to indicate the data packet that is successfully received by the remote device and/or the data packet that fails to be received by the remote device. Based on this, the target network device may indicate the receiving status of the data packet to the source network device, so that the source network device can send the first data packet to the target network device. The first data packet is the data packet of the remote device. For example, the first data packet may include the data packet that fails to be received by the remote device. In this way, the target network device may send, to the remote device, the data packet that fails to be received by the remote device, to reduce a packet loss rate.

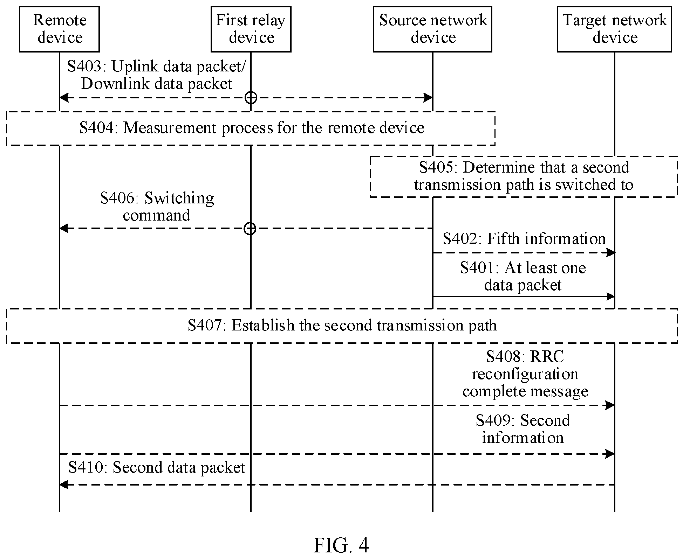

The following describes a second communication method provided in embodiments of this application. FIG. 4 is a flowchart of the method.

S401: A source network device sends at least one data packet to a target network device. Correspondingly, the target network device receives the at least one data packet from the source network device. This process is, for example, a data forwarding process.

The at least one data packet may include a data packet that the source network device predicts that a remote device fails to receive. For example, when communicating with the remote device through a first relay device, the source network device may predict the data packet that fails to be received by the remote device. If the remote device performs transmission path switching, the source network device may send, to the target network device, predicted data packets that fail to be received by the remote device, so that the target network device can continue to send these data packets to the remote device after the remote device performs transmission path switching, to reduce a packet loss rate. It is equivalent to that in this embodiment of this application, the source network device may determine through prediction, without depending on an RLC feedback from the first relay device, which data packets are data packets that fail to be received by the remote device. This can reduce the packet loss rate caused because the first relay device cannot feed back an actual receiving status of the remote device.

For example, the source network device may predict transmission duration of the data packet from the source network device to the remote device. If the source network device sends a switching command to the remote device to indicate the remote device to perform transmission path switching, the source network device may predict, based on one or more of sending time of a data packet that has been sent to the remote device, the transmission duration of the data packet from the source network device to the remote device, or sending time of the switching command, the data packet that fails to be received by the remote device. For example, before sending the switching command, the source network device separately sends a data packet 1 and a data packet 2 to the remote device at a moment T1 and a moment T2, and the source network device sends the switching command at a moment T3. The moment T1 is before the moment T2, and the moment T2 is before the moment T3. The transmission duration of the data packet is T4. For example, if a time difference between time at which the source network device sends one data packet and the moment T3 is less than T4, the source network device may determine that the remote device fails to receive the data packet. For example, if a time difference between T1 and T3 is less than T4, the source network device predicts that the remote device fails to receive the data packet 1. Alternatively, considering that specific transmission duration, for example, T4, also needs to be taken before the switching command arrives at the remote device, if a time difference between time at which the source network device sends one data packet and a moment (T3+T4) is less than T4, the source network device may determine that the remote device fails to receive the data packet. For example, if a time difference between T1 and the moment (T3+T4) is less than T4, the source network device predicts that the remote device fails to receive the data packet 1.

Alternatively, the source network device may predict, in another manner, the data packet that fails to be received by the remote device. A specific manner is not limited.

Optionally, in addition to the data packet that the source network device predicts that the remote device fails to receive, the at least one data packet may further include a data packet that has not been sent by the source network device to the remote device. The data packet that has not been sent by the source network device to the remote device may include a data packet that has been associated with an SN and/or a data packet that has not been associated with an SN.

The data forwarding process in S401 may be referred to as redundant data forwarding. This is because the source network device performs forwarding based on the prediction instead of performing forwarding based on the RLC feedback from the first relay device. In addition, different from dual active protocol stack (DAPS, dual active protocol stack) switching, the source network device can forward the data packet that is not associated with an SN without waiting for a terminal handover success message sent by the target network device. Optionally, if the source network device determines that the remote device that performs path switching is a remote device connected to the source network device through an indirect path, the source network device may perform data forwarding in the manner in S401. If the remote device that performs path switching is a remote device connected to the source network device through a direct path, the source network device may not need to perform data forwarding in the manner in S401.

Optionally, the method may further include: S402: The source network device may send fifth information to the target network device. Correspondingly, the target network device receives the fifth information from the source network device. S402 may be performed before S401, or may be performed after S401, or may be performed at the same time with S401.

For example, if the data packet that has not been sent by the source network device to the remote device includes the data packet that is not associated with an SN, the fifth information may indicate a sequence number of a 1^{st} data packet that is not associated with an SN, for example, indicate an SN of the 1^{st} data packet that is not associated with an SN, or indicate a count of the 1^{st} data packet that is not associated with an SN. After receiving the fifth information, the target network device may associate an SN with each data packet that is not associated with an SN. Alternatively, the fifth information may indicate a sequence number of a 1^{st} data packet in data packets forwarded to the target network device, for example, may indicate an SN and an HFN of the 1^{st} data packet. In this way, after receiving the fifth information, the target network device may determine a sequence number of each received data packet.

Optionally, the fifth information may be a sequence number status transfer message, or the fifth information may be included in the sequence number status transfer (SN STATUS TRANSFER) message. Alternatively, the fifth message may be an early status transfer (early status transfer) message.

This embodiment of this application may relate to a transmission path switching process of the remote device. Therefore, optionally, before S401 (or before S402), the method may further include S403 to S406.

S403: The remote device communicates with the source network device through the first relay device. For example, the remote device may send an uplink data packet to the source network device through the first relay device, and/or the remote device may receive a downlink data packet from the source network device through the first relay device.

S404: Perform a measurement process of the remote device. For more content of S404, refer to S305 in the embodiment shown in FIG. 3.

S405: The source network device and/or the target network device determine/determines that the remote device performs transmission path switching. Alternatively, the source network device or the target network device determines that the remote device switches to a second transmission path. For more content of S405, refer to S306 in the embodiment shown in FIG. 3.

S406: The source network device sends the switching command to the remote device through the first relay device. Correspondingly, the remote device receives the switching command from the source network device through the first relay device. The switching command may indicate the remote device to switch to the second transmission path.

Optionally, after receiving the switching command, the remote device may be disconnected from the first relay device.

Alternatively, the source network device may further send fourth information to the remote device. For example, the fourth information indicates a first data packet. For example, the fourth information may include a sequence number of the first data packet, to indicate the first data packet. For example, the fourth information is included in the switching command, or may be separately sent. The fourth information indicates the first data packet, to indicate the remote device to stop communicating with the first relay device after receiving the first data packet. In this case, after receiving the fourth information, if the remote device has not received the first data packet currently, even if the remote device has received the switching command currently, the remote device may not be disconnected from the first relay device, but continue to communicate with the first relay device. The remote device may stop communicating with the first relay device until the remote device receives the first data packet. Alternatively, the fourth information indicates the first data packet, to indicate the remote device to stop communicating with the first relay device after a next data packet to be delivered to an upper layer is the first data packet or a data packet posterior to the first data packet. For example, a PDCP layer of the remote device may sort received data packets. For sorted data packets with consecutive sequence numbers, the PDCP layer may deliver the data packets to the upper layer. For sorted data packets with inconsecutive sequence numbers, the PDCP layer does not deliver, to the upper layer, the data packets starting from a 1^{st} data packet with an inconsecutive sequence number, but continues to wait for receiving a data packet that has not been received. RX_DELIV of the remote device may be used to record a sequence number of the 1^{st} data packet that is of the remote device and that is not delivered to the upper layer of the PDCP layer. For example, if a value of RX_DELIV is equal to 4, it indicates that the 1^{st} data packet that is of the remote device and that is not delivered to the upper layer of the PDCP layer is the first data packet; or if a value of RX_DELIV is greater than 4, it indicates that the 1^{st} data packet that is of the remote device and that is not delivered to the upper layer of the PDCP layer is a data packet posterior to the first data packet.

Alternatively, after the remote device receives the fourth information, if the remote device has received the first data packet currently, the remote device may be disconnected from the first relay device. It is equivalent to that in this case, the remote device may be disconnected from the first relay device when a condition that "the first data packet has been received" is met, so that the source network device can determine, even if there is no feedback, that the remote device successfully receives the first data packet and all data packets prior to the first data packet. In this way, the source network device can determine the data packet that fails to be received by the remote device. For example, the data packet that fails to be received by the remote device is a data packet posterior to the first data packet. Alternatively, the source network device may not send the data packet posterior to the first data packet to the remote device. Therefore, the at least one data packet in S401 may include the data packet that has not been sent by the source network device to the remote device. For example, the source network device indicates, by using the fourth information, the remote device to stop communicating with the first relay device after receiving a data packet whose sequence number is {3}, or indicates, by using the fourth information, the remote device to stop communicating with the first relay device when a sequence number corresponding to a 1^{st} data packet delivered to the upper layer is {4} or a sequence number after {4}. In this case, the at least one data packet in S401 may include the data packet whose sequence number is {4} and a data packet that is after the data packet whose sequence number is {4}.

Optionally, the switching command may further indicate a data radio bearer (data radio bearer, DRB) corresponding to the fourth information. For example, the switching command includes an identity (identity, ID) of the DRB corresponding to the fourth information.

For example, the switching command is an RRC reconfiguration message.

Optionally, the method may further include S407 to S410.

S407: The remote device establishes the second transmission path with the target network device based on the switching command. S407 may be performed before S401, or may be performed after S401, or may be performed at the same time with S401. S407 may be performed before S402, or may be performed after S402, or may be performed at the same time with S402.

For example, if the second transmission path is a direct path, the remote device may perform a random access procedure, to access the target network device. Alternatively, if the second transmission path is an indirect path, the remote device may establish an RRC connection to the target network device through a second relay device.

S408: The remote device sends an RRC reconfiguration complete message to the target network device. Correspondingly, the target network device receives the RRC reconfiguration complete message from the remote device. The RRC reconfiguration complete message may indicate that the remote device successfully performs transmission path switching, or indicate that the remote device is successfully handed over to the target network device.

S409: The remote device sends second information to the target network device. Correspondingly, the target network device receives the second information from the remote device.

Optionally, if the source network device sends the fourth information to the remote device, there is a high probability that the remote device successfully receives all data packets. In this case, S409 may not be performed, or S409 may be performed. In this case, the second information may indicate the data packets that are successfully received by the remote device, and the data packets that are successfully received by the remote device may include all data packets received by the remote device.

For more content of this step, refer to S302 in the embodiment shown in FIG. 3.

S410: The target network device sends a second data packet to the remote device. Correspondingly, the remote device receives the second data packet from the target network device.

The second data packet may include one or more data packets. For example, the second data packet may include a data packet that fails to be received by the remote device. If the remote device has no data packet that fails to be received, S410 may not be performed.

In this embodiment of this application, the source network device sends, to the target network device based on prediction, a data packet that may fail to be received by the remote device. Therefore, if the remote device fails to receive data packets, these data packets may have been stored in the target network device. In this case, if the target network device determines, based on first information, the data packets that fail to be received by the remote device, the target network device may send these locally stored data packet to the remote device, and does not need to request the data packets from the source network device. In this way, a process of interaction between the target network device and the source network device is reduced, signaling overheads are reduced, and a delay in obtaining data by the remote device is reduced. Optionally, the source network device may further send the fourth information to the remote device, to indicate a data packet that may be received by the remote device from the source network device, so that an amount of data sent by the source network device to the target network device can be reduced, transmission overheads can be reduced, and a packet loss amount of the remote device can also be reduced.

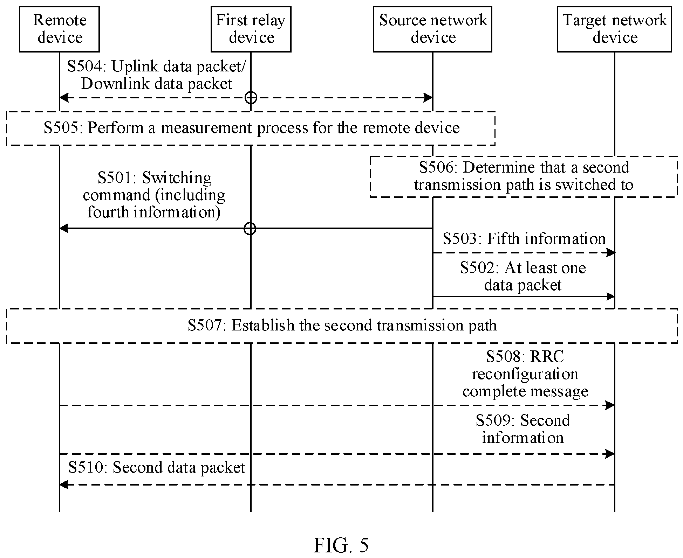

The following describes a third communication method provided in embodiments of this application. FIG. 5 is a flowchart of the method.

S501: A source network device sends fourth information to a remote device through a first relay device. Correspondingly, the remote device receives the fourth information from the source network device through the first relay device.

For example, the fourth information indicates a first data packet. For example, the fourth information may include a sequence number of the first data packet, to indicate the first data packet. For example, the fourth information is included in a switching command, or may be separately sent. In FIG. 5, for example, the fourth information is included in the switching command. The fourth information indicates the first data packet, to indicate the remote device to stop communicating with the first relay device after receiving the first data packet, or to indicate the remote device to stop communicating with the first relay device after a next data packet to be delivered to an upper layer is the first data packet or a data packet posterior to the first data packet.

For more content of S501, refer to S406 in the embodiment shown in FIG. 4.

S502: The source network device sends at least one data packet to a target network device. Correspondingly, the target network device receives the at least one data packet from the source network device. This process is, for example, a redundant data forwarding process.

The at least one data packet may include a data packet that has not been sent by the source network device to the remote device. For example, the source network device indicates, by using the fourth information, the remote device to stop communicating with the first relay device after receiving a data packet whose sequence number is {3}. In this case, the at least one data packet may include a data packet whose sequence number is {4} and a data packet that is after the data packet whose sequence number is {4}. Because the source network device has ensured to some extent, by using the fourth information, that an actual receiving status of a data packet of the remote device is consistent with a receiving status that is of a data packet of the remote device and that is considered by the source network device, the source network device does not need to send excessive data packets to the target network device. This can reduce transmission overheads.

Optionally, the method may further include: S503: The source network device may send fifth information to the target network device. Correspondingly, the target network device receives the fifth information from the source network device. S503 may be performed before S502, or may be performed after S502, or may be performed at the same time with S502. For more content of S503, refer to S402 in the embodiment shown in FIG. 4.

This embodiment of this application may relate to a transmission path switching process of the remote device. Therefore, optionally, before S501, the method may further include S504 to S506.

S504: The remote device communicates with the source network device through the first relay device. For example, the remote device may send an uplink data packet to the source network device through the first relay device, and/or the remote device may receive a downlink data packet from the source network device through the first relay device.

S505: Perform a measurement process for the remote device. For more content of S505, refer to S305 in the embodiment shown in FIG. 3.

S506: The source network device and/or the target network device determine/determines that the remote device performs transmission path switching. Alternatively, the source network device or the target network device determines that the remote device switches to a second transmission path. For more content of S506, refer to S306 in the embodiment shown in FIG. 3.

Optionally, the method further includes S507 to S510.

S507: The remote device establishes the second transmission path with the target network device based on the switching command. S507 may be performed before S502, or may be performed after S502, or may be performed at the same time with S502. S507 may be performed before S503, or may be performed after S503, or may be performed at the same time with S503.

For example, if the second transmission path is a direct path, the remote device may perform a random access procedure, to access the target network device. Alternatively, if the second transmission path is an indirect path, the remote device may establish an RRC connection to the target network device through a second relay device.

S508: The remote device sends an RRC reconfiguration complete message to the target network device. Correspondingly, the target network device receives the RRC reconfiguration complete message from the remote device. The RRC reconfiguration complete message may indicate that the remote device successfully performs transmission path switching, or indicate that the remote device is successfully handed over to the target network device.

S509: The remote device sends second information to the target network device. Correspondingly, the target network device receives the second information from the remote device.

Optionally, if the source network device sends the fourth information to the remote device, there is a high probability that the remote device successfully receives all data packets. In this case, S509 may not be performed, or S509 may be performed. In this case, the second information may indicate the data packets that are successfully received by the remote device, and the data packets that are successfully received by the remote device may include all data packets received by the remote device.

For more content of this step, refer to S302 in the embodiment shown in FIG. 3.

S510: The target network device sends a second data packet to the remote device. Correspondingly, the remote device receives the second data packet from the target network device.

The second data packet may include one or more data packets. For example, the second data packet may include a data packet that fails to be received by the remote device. If the remote device has no data packet that fails to be received, S510 may not be performed.

In this embodiment of this application, the remote device is disconnected from the first relay device only after receiving the first data packet. In this case, it may be considered that the remote device successfully receives the first data packet and all data packets prior to the first data packet. However, the source network device sends a data packet posterior to the first data packet to the target network device. Therefore, after the remote device performs transmission path switching, the target network device may continue to send the data packet to the remote device. This reduces a packet loss amount of the remote device. In addition, the source network device does not need to send excessive data packets to the target network device. This can reduce transmission overheads.

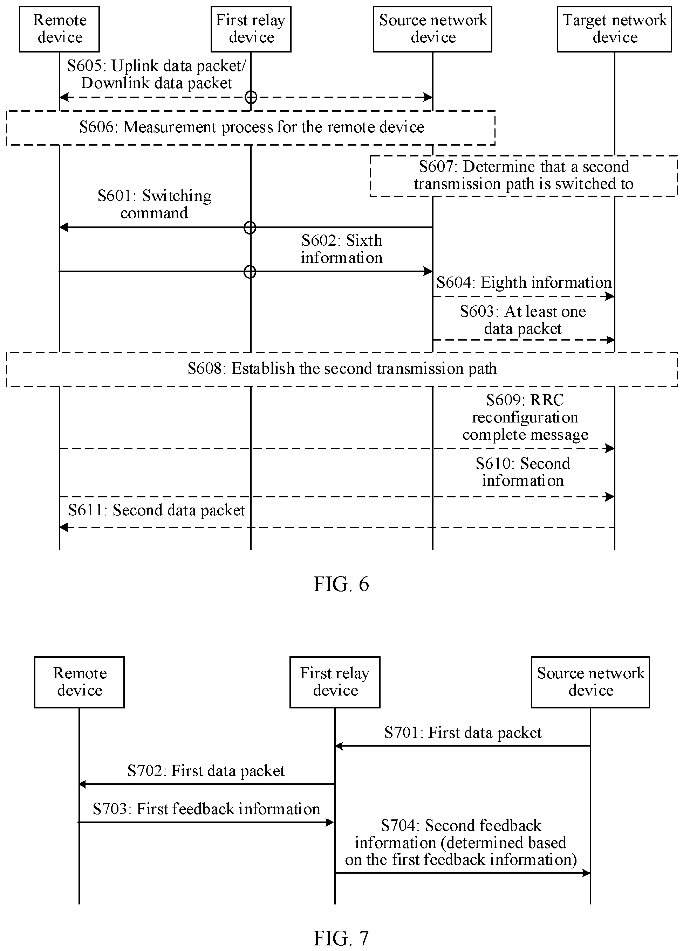

The following describes a fourth communication method provided in embodiments of this application. FIG. 6 is a flowchart of the method.

S601: A source network device sends a switching command to a remote device through a first relay device. Correspondingly, the remote device receives the switching command from the source network device through the first relay device. The switching command may indicate the remote device to switch to a second transmission path.

For example, after receiving the switching command, the remote device may be disconnected from the first relay device.

For example, the switching command is an RRC reconfiguration message.

Optionally, the switching command may further include seventh information, and the seventh information may indicate the remote device to send receiving status information. The receiving status information is information about a receiving status of a data packet of the remote device. This is equivalent to that the source network device triggers, in an explicit indication manner, the remote device to send the information about the receiving status of the data packet of the remote device, to simplify an implementation of the remote device.

Optionally, the switching command may further indicate a DRB corresponding to the seventh information. For example, the switching command includes an ID of the DRB corresponding to the seventh information.

S602: The remote device sends sixth information to the source network device through the first relay device. Correspondingly, the source network device receives the sixth information from the remote device through the first relay device.

The sixth information is, for example, the information about the receiving status of the data packet of the remote device. The sixth information may indicate a data packet that fails to be received by the remote device and/or a data packet that is successfully received by the remote device. For example, an implementation of the sixth information may be similar to the implementation of the second information in the embodiment shown in FIG. 3. Therefore, for more content, refer to the descriptions of the second information in the embodiment shown in FIG. 3.

For example, the remote device may trigger reporting of the sixth information based on the switching command. Alternatively, the remote device may trigger reporting of the sixth information based on the seventh information. Alternatively, after receiving the switching command, the remote device may send the sixth information via an RRC message.

In this embodiment of this application, the remote device may notify the source network device of an actual receiving status of the remote device, so that the source network device can determine, based on the sixth information, the data packet that fails to be received by the remote device.

S603: The source network device sends at least one data packet to a target network device. Correspondingly, the target network device receives the at least one data packet from the source network device. This process is, for example, a data forwarding process, or a redundant data forwarding process in S401.

The at least one data packet may include a data packet that has not been sent by the source network device to the remote device. For example, if the source network device determines, based on the sixth information, that the remote device fails to receive data packets whose sequence numbers are {1, 2, 4, 6} and a data packet that is after the data packet whose sequence number is {6}, the at least one data packet may include the data packets whose sequence numbers are {1, 2, 4, 6} and the data packet that is after the data packet whose sequence number is {6}. Because the source network device has learned of the actual receiving status of the remote device, the source network device does not need to send excessive data packets to the target network device. This can reduce transmission overheads. In addition, the data packet sent by the source network device to the target network device also includes the data packet that fails to be received by the remote device, so that a packet loss amount of the remote device can be reduced.

Optionally, the method may further include: S604: The source network device may send eighth information to the target network device. Correspondingly, the target network device receives the eighth information from the source network device. S604 may be performed before S603, or may be performed after S603, or may be performed at the same time with S603. The eighth information may be similar to the fifth information in the embodiment shown in FIG. 4. Therefore, for more content of S604, refer to S402 in the embodiment shown in FIG. 4.

This embodiment of this application may relate to a transmission path switching process of the remote device. Therefore, optionally, before S601, the method may further include S605 to S607.

S605: The remote device communicates with the source network device through the first relay device. For example, the remote device may send an uplink data packet to the source network device through the first relay device, and/or the remote device may receive a downlink data packet from the source network device through the first relay device.

S606: Perform a measurement process for the remote device. For more content of S606, refer to S305 in the embodiment shown in FIG. 3.

S607: The source network device and/or the target network device determine/determines that the remote device performs transmission path switching. Alternatively, the source network device or the target network device determines that the remote device switches to the second transmission path. For more content of S607, refer to S306 in the embodiment shown in FIG. 3.

Optionally, the method further includes S608 to S611.

S608: The remote device establishes the second transmission path with the target network device based on the switching command. S608 may be performed before S603, or may be performed after S603, or may be performed at the same time with S603. S608 may be performed before S604, or may be performed after S604, or may be performed at the same time with S604.

For example, if the second transmission path is a direct path, the remote device may perform a random access procedure, to access the target network device. Alternatively, if the second transmission path is an indirect path, the remote device may establish an RRC connection to the target network device through a second relay device.

S609: The remote device sends an RRC reconfiguration complete message to the target network device. Correspondingly, the target network device receives the RRC reconfiguration complete message from the remote device. The RRC reconfiguration complete message may indicate that the remote device successfully performs transmission path switching, or indicate that the remote device is successfully handed over to the target network device.

S610: The remote device sends second information to the target network device. Correspondingly, the target network device receives the second information from the remote device.

For more content of this step, refer to S302 in the embodiment shown in FIG. 3.

S611: The target network device sends a second data packet to the remote device. Correspondingly, the remote device receives the second data packet from the target network device.

The second data packet may include one or more data packets. For example, the second data packet may include a data packet that fails to be received by the remote device.

In this embodiment of this application, the source network device learns of the actual receiving status of the remote device, and therefore may forward, to the target network device, data packets that fail to be received by the remote device. After the remote device performs transmission path switching, the target network device may send these data packets to the remote device, and does not need to request these data packets from the source network device. This reduces a process of interaction between the target network device and the source network device, and can also reduce a packet loss amount of the remote device.

The following describes a fifth communication method provided in embodiments of this application. FIG. 7 is a flowchart of the method.

S701: A source network device sends a first data packet to a first relay device. Correspondingly, the first relay device receives the first data packet from the source network device.

The first data packet is a data packet to be sent to a remote device, and the first relay device serves as a forwarding device. One data packet has a sequence number of a PDCP layer, that is, the sequence number described in the foregoing embodiments of this application, for example, an SN or a count. In addition, the data packet further has a sequence number of a radio link control (radio link control, RLC) layer. For example, a PDCP SN of the first data packet is {1}, and a radio link control (radio link control, RLC) SN of the first data packet is, for example, {a}.

S702: The first relay device sends the first data packet to the remote device. Correspondingly, the remote device receives the first data packet from the first relay device.

The first relay device may serve a plurality of remote devices, and a connection between the first relay device and the source network device may be shared by the plurality of remote devices. Therefore, after receiving the first data packet, the first relay device may update the RLC SN of the first data packet, so that RLC SNs of data packets of different remote devices are different. For example, the first relay device may update the RLC SN of the first data packet to {b}, and then send the first data packet to a PC5 RLC entity of the remote device through a PC5 RLC entity of the first relay device.

S703: The remote device sends first feedback information to the first relay device. Correspondingly, the first relay device receives the first feedback information from the remote device. For example, the PC5 RLC entity of the remote device may send the first feedback information to the PC5 RLC entity of the first relay device.

The first feedback information may indicate that a first data packet whose RLC SN is {b} is successfully received or fails to be received. For example, the first feedback information is feedback information from the RLC layer. For example, if the first feedback information is an acknowledgment (ACK), it indicates that the first data packet is successfully received; or if the first feedback information is a negative acknowledgment (NACK), it indicates that the first data packet fails to be received.

S704: The first relay device sends second feedback information to the source network device based on the first feedback information. Correspondingly, the source network device receives the second feedback information from the first relay device.

The second feedback information is, for example, the feedback information from the RLC layer, and the second feedback information may indicate that the first data packet whose RLC SN is {a} is successfully received or fails to be received. A status indicated by the second feedback information may be consistent with a status indicated by the first feedback information. For example, if the first feedback information indicates that the first data packet is successfully received, the second feedback information indicates that the first data packet is successfully received; or if the first feedback information indicates that the first data packet fails to be received, the second feedback information indicates that the first data packet fails to be received.

For example, after receiving the first feedback information, if the first relay device receives a polling (polling) instruction from an RLC entity of the source network device, the first relay device may send the second feedback information to the source network device. The polling instruction may be used to trigger the first relay device to send the feedback information.

Alternatively, after the first relay device receives the first feedback information, if a timer maintained by the RLC entity of the first relay device expires, the first relay device may send the second feedback information to the source network device. The timer is, for example, a t-reassembly (reassembly) timer. For example, if the first relay device fails to receive a data packet, the timer may expire. In this case, the first relay device may send the first feedback information to the source network device.

As described above, the second feedback information is determined based on the first feedback information. In this case, the first relay device needs to send the second feedback information to the source network device after receiving the first feedback information. In other words, in this embodiment of this application, it is specified that the first relay device should receive feedback information of the remote device, and then send feedback information to the source network device based on the feedback information of the remote device. In this manner, it can be ensured that an RLC feedback obtained by the source network device from the first relay device can reflect an actual receiving status of the remote device.

Optionally, after S704, the remote device may perform a transmission path switching process. Details about the process are not described again. Because the source network device has learned of the actual receiving status of the remote device, in the transmission path switching process, when forwarding data packets to the target network device, the source network device may forward, to the target network device, data packets that fail to be received by the remote device. In this way, after the remote device performs transmission path switching, the target network device may continue to send these data packets to the remote device. In this manner, the source network device does not need to send excessive data packets to the target network device. This can reduce transmission overheads. In addition, the target network device does not need to request the data packets from the source network device any more. This reduces a process of interaction between the target network device and the source network device, and also reduces a packet loss amount of the remote device.

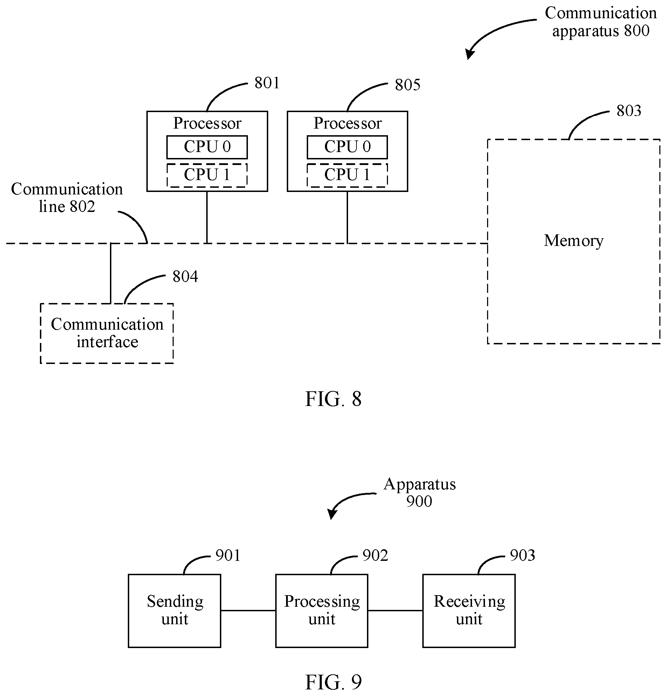

FIG. 8 is a diagram of a structure of a communication apparatus according to an embodiment of this application. The communication apparatus 800 may be the remote device in the embodiment shown in any one of FIG. 3 to FIG. 7 or a circuit system of the remote device, and is configured to implement the method corresponding to the remote device in the foregoing method embodiment. Alternatively, the communication apparatus 800 may be the source network device in the embodiment shown in any one of FIG. 3 to FIG. 7 or a circuit system of the source network device, and is configured to implement the method corresponding to the source network device in the foregoing method embodiment. Alternatively, the communication apparatus 800 may be the target network device in the embodiment shown in any one of FIG. 3 to FIG. 7 or a circuit system of the target network device, and is configured to implement the method corresponding to the target network device in the foregoing method embodiment. Alternatively, the communication apparatus 800 may be the first relay device in the embodiment shown in any one of FIG. 3 to FIG. 7 or a circuit system of the first relay device, and is configured to implement the method corresponding to the first relay device in the foregoing method embodiment. For specific functions, refer to descriptions of the foregoing method embodiments. For example, a circuit system is a chip system.

The communication apparatus 800 includes at least one processor 801. The processor 801 may be configured to perform internal processing of the apparatus, to implement a specific control processing function. Optionally, the processor 801 includes instructions. Optionally, the processor 801 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 800 includes one or more memories 803, configured to store instructions. Optionally, the memory 803 may further store data. The processor and the memory may be separately disposed, or may be integrated together.

Optionally, the communication apparatus 800 includes a communication line 802 and at least one communication interface 804. Because the memory 803, the communication line 802, and the communication interface 804 are all optional, the memory 803, the communication line 802, and the communication interface 804 are all represented by dashed lines in FIG. 8.

Optionally, the communication apparatus 800 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 800 through the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 801 may include a general-purpose central processing unit (central processing unit, CPU), a microprocessor, an application-specific integrated circuit (application-specific integrated circuit, ASIC), or one or more integrated circuits configured to control program execution in the solutions of this application.

The communication line 802 may include a path and transfers information between the foregoing components.

The communication interface 804 is configured to communicate, via any apparatus such as a transceiver, with another device or a communication network, for example, an ethernet, a radio access network (radio access network, RAN), a wireless local area network (wireless local area network, WLAN), or a wired access network.

The memory 803 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction or data structure form and that can be accessed by a computer, but is not limited thereto. The memory 803 may exist independently, and is connected to the processor 801 via the communication line 802. Alternatively, the memory 803 may be integrated with the processor 801.

The memory 803 is configured to store computer-executable instructions for executing the solution of this application, and the processor 801 controls execution of the computer-executable instructions. The processor 801 is configured to execute the computer-executable instructions stored in the memory 803, to implement the communication methods provided in the foregoing embodiments of this application.

Optionally, the computer-executable instructions in this embodiment of this application may also be referred to as application program code. This is not specifically limited in this embodiment of this application.

During specific implementation, in an embodiment, the processor 801 may include one or more CPUs, for example, a CPU 0 and a CPU 1 shown in FIG. 8.

During specific implementation, in one embodiment, the communication apparatus 800 may include a plurality of processors, for example, the processor 801 and a processor 805 in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 8 is a chip, for example, a chip of the remote device, a chip of the source network device, a chip of the target network device, or a chip of the first relay device, the chip includes the processor 801 (which may further include the processor 805), the communication line 802, and the communication interface 804. Optionally, the chip may further include the memory 803. Specifically, the communication interface 804 may be an input interface, a pin, a circuit, or the like. The memory 803 may be a register, a buffer, or the like. The processor 801 and the processor 805 may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. For example, when each functional module is obtained through division based on each corresponding function, FIG. 9 shows a diagram of an apparatus. The apparatus 900 may be the remote device, the source network device, the target network device, or the first relay device in the foregoing method embodiments, or may be a chip in the remote device, a chip in the source network device, a chip in the target network device, or a chip in the first relay device. The apparatus 900 includes a sending unit 901, a processing unit 902, and a receiving unit 903.

It should be understood that the apparatus 900 may be configured to implement the steps performed by the remote device, the source network device, the target network device, or the first relay device in the methods in embodiments of this application. For related features, refer to the foregoing embodiments. Details are not described herein again.

Optionally, functions/implementation processes of the sending unit 901, the receiving unit 903, and the processing unit 902 in FIG. 9 may be implemented by the processor 801 in FIG. 8 by invoking the computer-executable instructions stored in the memory 803. Alternatively, functions/implementation processes of the processing unit 902 in FIG. 9 may be implemented by the processor 801 in FIG. 8 by invoking the computer-executable instructions stored in the memory 803, and functions/implementation processes of the sending unit 901 and the receiving unit 903 in FIG. 9 may be implemented by the communication interface 804 in FIG. 8.

Optionally, when the apparatus 900 is a chip or a circuit, the functions/implementation processes of the sending unit 901 and the receiving unit 903 may alternatively be implemented by a pin, a circuit, or the like.

This application further provides a computer-readable storage medium. The computer-readable storage medium stores a computer program or instructions. When the computer program or the instructions are run, the methods performed by the remote device, the source network device, the target network device, or the first relay device in the foregoing method embodiments are implemented. In this way, the functions in the foregoing embodiments may be implemented in a form of a software functional unit and sold or used as an independent product. Based on such an understanding, the technical solutions of this application essentially, or the part contributing to conventional technologies, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the remote device, the source network device, the target network device, or the first relay device in any one of the foregoing method embodiments.

An embodiment of this application further provides a processing apparatus, including a processor and an interface. The processor is configured to perform the method performed by the remote device, the source network device, the target network device, or the first relay device in any one of the foregoing method embodiments.

All or some of the foregoing embodiments may be implemented by software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by using a general-purpose processor, a digital signal processor (digital signal processor, DSP), an application-specific integrated circuit (application-specific integrated circuit, ASIC), a field-programmable gate array (field-programmable gate array, FPGA) or another programmable logic apparatus, a discrete gate or transistor logic, a discrete hardware part, or a design of any combination of the foregoing devices. The general-purpose processor may be a microprocessor. Optionally, the general-purpose processor may also be any conventional processor, controller, microcontroller, or state machine. The processor may also be implemented by a combination of computing apparatuses, such as a digital signal processor and a microprocessor, multiple microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may connect to a processor so that the processor may read information from the storage medium and write information to the storage medium. Optionally, the storage medium may be integrated into a processor. The processor and the storage medium may be disposed in an ASIC, and the ASIC may be disposed in a terminal device. Optionally, the processor and the storage medium may be disposed in different parts of a terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments of this application and the accompanying drawings are merely example descriptions of embodiments of this application defined by the appended claims, and are considered to cover any or all modifications, variations, combinations, or equivalents in the scope of embodiments of this application. Apparently, a person skilled in the art may make various modifications and variations to embodiments of this application without departing from the scope of embodiments of this application. In this way, embodiments of this application are also intended to cover these modifications and variations provided that they fall within the scope of the claims of embodiments of this application and equivalent technologies thereof.

## Claims

1. A communication method, applied to a target network device, wherein the method comprises:
sending first information to a source network device, wherein the first information indicates a receiving status of a data packet; and
receiving a first data packet from the source network device, wherein the first data packet is a data packet of a remote device, the first data packet is determined based on the first information, and the remote device is connected to the source network device through a first relay device before transmission path switching, and is connected to the target network device after transmission path switching.

2. The method according to claim 1, wherein the method further comprises:
sending a second data packet to the remote device, wherein the second data packet is determined based on the first data packet.

3. The method according to claim 1 or 2, wherein the remote device is connected to the target network device through a direct path or an indirect path after transmission path switching.

4. The method according to any one of claims 1 to 3, wherein the method further comprises:
receiving second information from the remote device, wherein the second information indicates a data packet that fails to be received by the remote device and/or a data packet that is successfully received by the remote device.

5. The method according to claim 4, wherein
the second information is a PDCP status report; or
the second information is comprised in an RRC reconfiguration message, and the RRC reconfiguration message indicates that the remote device is successfully handed over to the target network device.

6. The method according to any one of claims 2 to 5, wherein
the first data packet is the second data packet; or
the first data packet is a part of the second data packet, the first data packet is a data packet that has not received by the target network device from the source network device before the target network device receives the first data packet, the second data packet further comprises another part of data packet, and the another part of data packet is a data packet that has been received by the target network device from the source network device before the target network device receives the first data packet; or
the second data packet is a part of the first data packet.

7. The method according to claim 6, wherein the method further comprises:
receiving a third data packet from the source network device before sending the first information to the source network device, wherein the third data packet comprises a data packet for which the source network device receives no receiving feedback, and/or comprises a data packet that has not been sent by the source network device to the remote device, and the third data packet comprises the another part of data packet.

8. The method according to any one of claims 1 to 6, wherein the receiving a first data packet from the source network device comprises:
receiving a third data packet from the source network device, wherein the third data packet comprises a data packet for which the source network device receives no receiving feedback, and/or comprises a data packet that has not been sent by the source network device to the remote device, and the third data packet comprises the first data packet.

9. The method according to claim 7 or 8, wherein the third data packet comprises the data packet that has not been sent by the source network device to the remote device, and the data packet that has not been sent by the source network device to the remote device comprises a data packet that is not associated with a sequence number; and the method further comprises:
receiving third information from the source network device, wherein the third information indicates a sequence number of a 1^{st} data packet that is not associated with a sequence number.

10. A communication method, applied to a source network device, wherein the method comprises:
receiving first information from a target network device, wherein the first information indicates a receiving status of a data packet; and
sending a first data packet to the target network device, wherein the first data packet is a data packet of a remote device, the first data packet is determined based on the first information, and the remote device is connected to the source network device through a first relay device before transmission path switching, and is connected to the target network device after transmission path switching.

11. The method according to claim 10, wherein the remote device is connected to the target network device through a direct path or an indirect path after transmission path switching.

12. The method according to claim 10 or 11, wherein the method further comprises:
sending a third data packet to the target network device before receiving the first information from the target network device, wherein the third data packet comprises a data packet for which the source network device receives no receiving feedback, and/or comprises a data packet that has not been sent by the source network device to the remote device.

13. The method according to claim 10 or 11, wherein the sending a first data packet to the target network device comprises:
sending a third data packet to the target network device, wherein the third data packet comprises a data packet for which the source network device receives no receiving feedback, and/or comprises a data packet that has not been sent by the source network device to the remote device, and the third data packet comprises the first data packet.

14. The method according to claim 12 or 13, wherein the third data packet comprises the data packet that has not been sent by the source network device to the remote device, and the data packet that has not been sent by the source network device to the remote device comprises a data packet that is not associated with a sequence number; and the method further comprises:
sending third information to the target network device, wherein the third information indicates a sequence number of a 1^{st} data packet that is not associated with a sequence number.

15. A communication method, applied to a source network device, wherein the method comprises:
sending at least one data packet to a target network device, wherein the at least one data packet comprises a data packet that the source network device predicts that a remote device fails to receive, and the remote device is connected to the source network device through a first relay device before transmission path switching, and is connected to the target network device after transmission path switching.

16. The method according to claim 15, wherein the method further comprises:
sending fourth information to the remote device, wherein the fourth information indicates a first data packet, to indicate the remote device to stop communicating with the first relay device after receiving the first data packet.

17. The method according to claim 16, wherein the fourth information is comprised in a switching command, and the switching command indicates the remote device to perform transmission path switching.

18. The method according to any one of claims 15 to 17, wherein the at least one data packet comprises a data packet that is not associated with a sequence number; and the method further comprises:
sending fifth information to the target network device, wherein the fifth information indicates a sequence number of a 1^{st} data packet that is not associated with a sequence number.

19. A communication method, applied to a source network device, wherein the method comprises:
sending a switching command to a remote device, wherein the switching command indicates the remote device to perform transmission path switching, and the remote device is connected to the source network device through a first relay device before transmission path switching, and is connected to a target network device after transmission path switching; and
receiving sixth information from the remote device, wherein the sixth information indicates a data packet that fails to be received by the remote device and/or a data packet that is successfully received by the remote device.

20. The method according to claim 19, wherein the switching command further comprises seventh information, and the seventh information indicates the remote device to send receiving status information.

21. The method according to claim 19 or 20, wherein the method further comprises:
sending at least one data packet to the target network device, wherein the at least one data packet comprises the data packet that fails to be received by the remote device.

22. The method according to claim 21, wherein the at least one data packet further comprises a data packet that has not been sent by the source network device to the remote device.

23. The method according to claim 22, wherein the data packet that has not been sent by the source network device to the remote device comprises a data packet that is not associated with a sequence number; and the method further comprises:
sending eighth information to the target network device, wherein the eighth information indicates a sequence number of a 1^{st} data packet that is not associated with a sequence number.

24. A communication method, applied to a remote device, wherein the method comprises:
receiving a switching command from a source network device, wherein the switching command indicates the remote device to perform transmission path switching, and the remote device is connected to the source network device through a first relay device before transmission path switching, and is connected to a target network device after transmission path switching; and
sending sixth information to the source network device, wherein the sixth information indicates a data packet that fails to be received by the remote device and/or a data packet that is successfully received by the remote device.

25. The method according to claim 24, wherein the switching command further comprises seventh information, and the seventh information indicates the remote device to send receiving status information.

26. A communication apparatus, comprising a processor and a memory, wherein the memory is coupled to the processor, and the processor is configured to perform the method according to any one of claims 1 to 9, or configured to perform the method according to any one of claims 10 to 14, or configured to perform the method according to any one of claims 15 to 18, or configured to perform the method according to any one of claims 19 to 23, or configured to perform the method according to claim 24 or 25.

27. A computer-readable storage medium, wherein the computer-readable storage medium is configured to store a computer program, and when the computer program is run on a computer, the computer is enabled to perform the method according to any one of claims 1 to 9, or the computer is enabled to perform the method according to any one of claims 10 to 14, or the computer is enabled to perform the method according to any one of claims 15 to 18, or the computer is enabled to perform the method according to any one of claims 19 to 23, or the computer is enabled to perform the method according to claim 24 or 25.

28. A chip system, wherein the chip system comprises:
a processor and an interface, wherein the processor is configured to invoke instructions from the interface and run the instructions, and when executing the instructions, the processor implements the method according to any one of claims 1 to 9, or implements the method according to any one of claims 10 to 14, or implements the method according to any one of claims 15 to 18, or implements the method according to any one of claims 19 to 23, or implements the method according to claim 24 or 25.

29. A computer program product, wherein the computer program product comprises a computer program, and when the computer program is run on a computer, the computer is enabled to perform the method according to any one of claims 1 to 9, or the computer is enabled to perform the method according to any one of claims 10 to 14, or the computer is enabled to perform the method according to any one of claims 15 to 18, or the computer is enabled to perform the method according to any one of claims 19 to 23, or the computer is enabled to perform the method according to claim 24 or 25.
